# EUROPÄISCHE PATENTSCHRIFT

(11) **EP 2 809 533 B1**
(45) Veröffentlichungstag und Bekanntmachung des Hinweises auf die Patenterteilung: **24.10.2018**
(21) Anmeldenummer: 12809580.9
(22) Anmeldetag: 28.11.2012
(51) Int. Cl.: B60G 17/052, B60G 17/056

(54) **DRUCKLUFTVERSORGUNGSANLAGE, PNEUMATISCHES SYSTEM UND VERFAHREN ZUM BETREIBEN EINER DRUCKLUFTVERSORGUNGSANLAGE BZW. EINES PNEUMATISCHEN SYSTEMS**
COMPRESSED AIR SUPPLY SYSTEM, PNEUMATIC SYSTEM AND METHOD FOR OPERATING A COMPRESSED AIR SUPPLY SYSTEM AND/OR PNEUMATIC SYSTEM
INSTALLATION D'ALIMENTATION EN AIR COMPRIMÉ ET SYSTÈME PNEUMATIQUE, ET PROCÉDÉ PERMETTANT DE FAIRE FONCTIONNER UNE TELLE INSTALLATION OU UN TEL SYSTÈME

(30) Priorität: 31.01.2012 DE 102012001736
(43) Veröffentlichungstag der Anmeldung: 10.12.2014
(73) Patentinhaber: WABCO GmbH, 30453 Hannover (DE)
(72) Erfinder: BECHER, Hans-Otto, 30177 Hannover (DE); MEIER, Jörg, 31840 Hessisch Oldendorf (DE); STABENOW, Uwe, 30880 Laatzen (DE)
(74) Vertreter: Lauerwald, Jörg
(86) Internationale Anmeldenummer: PCT/EP2012/004891
(87) Internationale Veröffentlichungsnummer: WO 2013/113344

(56) Entgegenhaltungen:
- EP-B1- 0 978 397
- EP-B1- 1 165 333
- DE-A1- 10 301 119
- DE-A1- 19 528 852
- DE-B4- 10 223 405

## Beschreibung

Die Erfindung betrifft eine Druckluftversorgungsanlage gemäß dem Oberbegriff des Anspruchs 1. Die Erfindung betrifft auch ein pneumatisches System mit einer solchen Druckluftversorgungsanlage. Weiter betrifft die Erfindung ein Verfahren zum Steuern einer Druckluftversorgungsanlage, insbesondere zum Betreiben einer Pneumatikanlage.

Eine Druckluftversorgungsanlage wird in Fahrzeugen aller Art, insbesondere zur Versorgung einer Luftfederanlage eines Fahrzeugs mit Druckluft, eingesetzt. Luftfederanlagen können auch Niveauregelungseinrichtungen umfassen, mit denen der Abstand zwischen Fahrzeugachse und Fahrzeugaufbau eingestellt werden kann. Eine Luftfederanlage eines eingangs genannten pneumatischen Systems umfasst eine Anzahl von an einer gemeinsamen Leitung (Galerie) pneumatisch angeschlossenen Luftbälgen, die mit zunehmender Befüllung den Fahrzeugaufbau anheben und entsprechend mit abnehmender Befüllung absenken können. Mit wachsendem Abstand zwischen Fahrzeugachse und Fahrzeugaufbau bzw. Bodenfreiheit werden die Federwege länger und auch größere Bodenunebenheiten können überwunden werden, ohne dass es zu einer Berührung mit dem Fahrzeugaufbau kommt. Solche Systeme werden in Geländefahrzeugen und Sport Utility Vehicles (SUV) eingesetzt. Insbesondere bei SUVs ist es bei sehr leistungsfähigen Motoren wünschenswert, das Fahrzeug einerseits für hohe Geschwindigkeiten auf der Straße mit vergleichsweise geringer Bodenfreiheit zu versehen und andererseits für das Gelände mit einer vergleichsweise großen Bodenfreiheit zu versehen. Es ist weiter wünschenswert, eine Veränderung der Bodenfreiheit möglichst schnell umzusetzen, was die Anforderung hinsichtlich Schnelligkeit, Flexibilität und Verlässlichkeit einer Druckluftversorgungsanlage erhöht.
Eine Druckluftversorgungsanlage zur Verwendung in einem pneumatischen System mit einer Pneumatikanlage, beispielsweise einer zuvor beschriebenen Luftfederanlage, wird mit Druckluft aus einer Druckluftzuführung, beispielsweise im Rahmen eines Druckniveaus von 5 bis 20 bar, betrieben. Die Druckluft wird mittels eines Luftverdichters, mit beispielsweise eines Kompressors oder gegebenenfalls eines Doppel-Kompressors, der Druckluftzuführung zur Verfügung gestellt. Die Druckluftzuführung ist zur Versorgung der Pneumatikanlage mit einem Druckluftanschluss pneumatisch verbunden und andererseits mit einem Entlüftungsanschluss pneumatisch verbunden. Über eine eine Entlüftungsventilanordnung bildende Magnetventilanordnung kann durch Ablassen von Luft in einem oder mehreren Entlüftungsanschlüssen die Druckluftversorgungsanlage zur Umgebung hin entlüftet werden.

Zur Sicherstellung eines langfristigen Betriebs der Druckluftversorgungsanlage weist diese einen Lufttrockner auf, mit dem die dem System zuzuführende Druckluft zu trocknen ist. Dadurch wird die Ansammlung von Feuchtigkeit im Pneumatiksystem vermieden, was anderenfalls bei vergleichsweise niedrigen Temperaturen zu ventilschädigender Kristallbildung führen könnte und darüber hinaus zu ungewünschten Defekten in der Druckluftversorgungsanlage und in der Pneumatikanlage. Ein Lufttrockner weist ein Trockenmittel auf, üblicherweise eine Granulatschüttung, welche von der Druckluft durchströmbar ist, so dass die Granulatschüttung --bei vergleichsweise hohem Druck-- in der Druckluft enthaltende Feuchtigkeit durch Absorption aufnehmen kann. Ein Lufttrockner kann gegebenenfalls als regenerativer Lufttrockner ausgelegt werden. Dies kann dadurch geschehen, dass die Granulatschüttung bei jedem Entlüftungszyklus --bei vergleichsweise niedrigem Druck-- mit der getrockneten Druckluft aus dem Luftfederungssystem im Gegenstrom oder Gleichstrom relativ zur Befüllrichtung durchströmt wird. Dazu kann die Entlüftungsventilanordnung geöffnet werden. Für eine solche --auch als Druckwechseladsorption bezeichneteAnwendung hat es sich als wünschenswert erwiesen, eine Druckluftversorgungsanlage flexibel und gleichzeitig verlässlich auszulegen, insbesondere eine vergleichsweise schnelle Entlüftung mit einem dennoch für eine Regeneration des Lufttrockners ausreichendem Druckwechsels zu ermöglichen.
Unter anderem im Hinblick auf die vorgenannten Gegebenheiten hat es sich als wünschenswert erwiesen, den Entlüftungsvorgang für eine Druckluftversorgungsanlage vergleichsweise verlässlich und effektiv durchzuführen; daraus entsteht auch das Bedürfnis, eine möglichst hohe Entlüftungsdruckamplitude, d. h. von einem Betriebsdruck auf einen Entlüftungsdruck zu erreichen, wobei dennoch die Komponenten der Magnetventilanordnung nicht überdimensioniert oder zu komplex aufgebaut sein sollten.
So genannte direkt entlüftende Schaltungen --ohne Steuerventil-- können eine eingangs genannte Funktionalität einer Magnetventilanordnung mit Steuer- und Entlüftungsventil entbehrlich machen. Dennoch kommt bei solchen direkt entlüftenden Schaltungen zum Tragen, dass eine Nennweite des Entlüftungsventils einerseits vergleichsweise groß ausgelegt werden sollte, um eine schnelle Entlüftung zu ermöglichen und gleichwohl begrenzt ist durch die Stromaufnahme einer Magnetspule für das Entlüftungsventil, so dass im Ergebnis nur bedingt hohe Schaltdruckdifferenzen erreichbar werden.

Die DE19528852A1 beschreibt eine Niveauregeleinrichtung mit einer die Luftfedern der linken und rechten Seite trennenden Schaltung von Rückschlagventilen und einem pneumatisch vorgesteuerten Entlüftungsventil, wobei der Steuerdruck des Entlüftungsventils direkt und unmittelbar aus den Luftfedern zugeführt wird.

Die DE10301119A1 beschreibt ein Luftfederungssystem für Fahrzeuge mit Luftfedern und einem Luftdruckspeicher. Zur Regeneration des Lufttrockners oder zur Niveauabsenkung der Luftfedern wird dem pneumatisch vorgesteuerten Entlüftungsventil entweder der Druck aus dem Luftdruckspeicher oder der Druck aus den Luftfedern zugeführt, wobei dieser Steuerdruck gleichzeitig in Strömungsrichtung vor der Ablassdrossel ansteht und zur Regeneration des Lufttrockners über die Ablassdrossel, das Ablassrückschlagventil, den Lufttrockner und das geöffnete Entlüftungsventil in die Umgebung durchgeleitet wird.

EP 1 165 333 B2 offenbart prinzipiell einen vergleichsweise einfachen Aufbau einer Druckluftversorgungsanlage der eingangs genannten Art, die eine Magnetventilanordnung mit einem Steuerventil zur Steuerung eines Entlüftungsventil aufweist. Das Steuerventil ist mit einem Ventilanschluss in einer an einen Drucksteueranschluss des Entlüftungsventils angeschlossenen Steuerleitung angeschlossen. Das Entlüftungsventil ist mit einem Ventilanschluss in der Entlüftungsleitung angeschlossen. Solche und ähnliche --grundsätzlich ein schnelles Entlüftungsschalten ermöglichende-- Druckluftversorgungsanlagen haben sich in ihrem grundsätzlichen Aufbau bewährt. Das Steuerventil ist regelmäßig als ein 3/2-Wegeventil gebildet und wird durch einen von einem Luftbalg der pneumatischen Hauptleitung zur Verfügung gestellten Druck bzw. einem von diesem abgezweigten Steuerdruck geschaltet. Der so an den Drucksteueranschluss des Entlüftungsventils weitergebbare Steuerdruck aktuiert das Öffnen des Ventilanschlusses des Entlüftungsventils in der Entlüftungsleitung und leitet damit die Entlüftung der Druckluftversorgungsanlage ein.

Nachteilig bei allen einem solchen Grundkonzept folgenden Druckluftversorgungsanlagen --wie beispielsweise auch der in DE 102 23 405 B4 oder EP 0 978 397 B1 oder DE 10 2009 029 898 A1-- ist, dass ein Relaiskolben des Entlüftungsventils üblicherweise eine durch eine Ventilfeder zur Verfügung gestellte Schließhaltekraft benötigt, so dass immer ein Restdruck --und ein dementsprechender Vorsteuerdruck-- für den Relaiskolben des Entlüftungsventils im System vorgehalten werden muss. Die Schließhaltekraft der Ventilfeder ist beispielsweise erforderlich, um ein Fördern des Luftverdichters gegen vergleichsweise hohe Drücke möglich zu machen. Außerdem ist das Öffnungsverhalten des Entlüftungsventils für einen Restdruck zu berücksichtigen. Diese Umstände führen regelmäßig dazu, dass ein minimaler zur Darstellung eines Vorsteuerdrucks beizubehaltender Balgdruck, etwa im Bereich von einem oder von einigen bar, vorgehalten werden sollte, um eine grundsätzliche Entlüftungsfunktionalität der Magnetventilanordnung zur Verfügung stellen zu können. Restdrücke können durchaus im Bereich von 1 oder 2 bis 3 bar liegen, so dass in einer Auslegung der Druckluftversorgungsanlage eine untere Druckgrenze für einen Balgdruck bei 3 bar oder mehr definiert werden muss. Trotz einer solchen Auslegung können je nach Betriebsumständen teilgeschlossene Ventilquerschnitte auftreten; diese wiederum können ein deutlich reduziertes Regenerationsverhalten bei einem Lufttrockner und damit instabile Systembetriebszustände zur Folge haben.

An dieser Stelle setzt die Erfindung an, deren Aufgabe es ist, eine Vorrichtung, insbesondere eine Druckluftversorgungsanlage und ein pneumatisches System mit einer Druckluftversorgungsanlage, anzugeben, die --aufbauend auf eine Magnetventilanordnung mit einem Steuerventil und einem Entlüftungsventileine verbesserte Funktionalität, insbesondere eine verbesserte Entlüftungsfunktionalität zur Verfügung stellt. Insbesondere soll eine Entlüftungsfunktionalität mit vergleichsweise hoher Druckamplitude möglich sein.

Insbesondere soll die Magnetventilanordnung bei der Druckluftversorgungsanlage dennoch vergleichsweise einfach und mit schneller Funktionalität ausgelegt sein; insbesondere sollen Beeinträchtigungsmöglichkeiten der Funktionalität weitgehend vermieden bzw. reduziert sein. Insbesondere soll die Aufgabe durch eine vergleichsweise einfache Modifikation bislang bestehender Systeme lösbar sein, insbesondere durch eine vergleichsweise einfache Modifikation eines eingangs genannten schnell entlüftenden Systems sowie ggf. einer Peripherie der Druckluftversorgungsanlage, wie beispielsweise einer Pneumatikanlage oder einer Steuerelektronik.

Aufgabe der Erfindung ist es auch, ein geeignetes Verfahren zum Betrieb, insbesondere Steuerung, der Druckluftversorgungsanlage und/oder der Pneumatikanlage anzugeben.

Gemäß einer Vorrichtung wird die Aufgabe durch die Erfindung mittels einer Druckluftversorgungsanlage der eingangs genannten Art gelöst, bei der erfindungsgemäß auch die Merkmale des kennzeichnenden Teils des Anspruchs 1 vorgesehen sind. Erfindungsgemäß ist vorgesehen, dass an die Steuerleitung eine druckhaltende pneumatische Einrichtung angeschlossen ist, die ausgebildet ist, den Drucksteueranschluss bei geöffnetem Entlüftungs-Ventilanschluss des Entlüftungsventils in der Entlüftungsleitung unter Steuerdruck zu halten, unabhängig von einem Druck in der Entlüftungsleitung und/oder der pneumatischen Hauptleitung. Ein Anschluss an die Steuerleitung umfasst auch einen Anschluss in der Steuerleitung. Eine druckhaltende pneumatische Einrichtung mit einem Anschluss kann an die Steuerleitung nur mit dem einen Anschluss angeschlossen sein; insofern nur einseitig angeschlossen sein, wie dies beispielsweise bei einem Druckspeicher, einem Druckreservoir oder einem Balg oder einem Kompressor der Fall sein kann. Auch kann eine zwei oder mehr Anschlüsse aufweisende druckhaltende pneumatische Einrichtung an die Steuerleitung mit den zwei Anschlüssen, ggf. auch den mehreren Anschlüssen, angeschlossen sein; insofern zweiseitig in der Steuerleitung integriert sein, wie dies beispielsweise bei einem Ventil, insbesondere einem 2/2-Ventil, der Fall sein kann. Das Ventil kann auch weitere Anschlüsse aufweisen, die nicht an die Steuerleitung angeschlossen sind, wie dies beispielsweise bei einem 3/2-Ventil der Fall sein kann.

Betreffend eine Vorrichtung wird die Aufgabe durch die Erfindung auch mittels eines pneumatischen Systems des Anspruchs 18 gelöst. Insbesondere hat sich die Erfindung bewährt bei einem pneumatischen System mit der Druckluftversorgungsanlage gemäß der Erfindung sowie einer Pneumatikanlage in Form einer Luftfederanlage, wobei die Luftfederanlage eine Galerie und wenigstens eine an die Galerie pneumatisch angeschlossene Balg- und/oder Speicher-Zweigleitung mit einem Balg und/oder einem Druckspeicher sowie einer dem Balg und/oder dem Druckspeicher vorgeordneten Wegeventil aufweist.

Hinsichtlich eines Verfahrens wird die Aufgabe durch die Erfindung mit einem Verfahren des Anspruchs 19 gelöst.

Die Erfindung geht von der Überlegung aus, dass sich die eingangs genannte Magnetventilanordnung mit einem Steuerventil zur Steuerung eines Entlüftungsventils bei einer Druckluftversorgungsanlage jedenfalls grundsätzlich bewährt hat. Die Nutzung eines in einer pneumatischen Hauptleitung anliegenden Balgdrucks zur Darstellung eines Steuerdrucks an einem Drucksteueranschluss des Entlüftungsventils ist durchaus zweckmäßig und kann dennoch hinsichtlich der eingangs genannten Problematik eines Resthaltedrucks, insbesondere Restbalgdrucks, hinderlich sein. Ein insofern erforderlicher Resthaltedruck kann einschränkend wirken, wenn eine besonders effektive Druckwechseladsorption zur Regeneration eines Trockners bzw. eine hohe Federamplitude bei einer Luftfederanlage zu erreichen bzw. zu optimieren sein soll. Die Erfindung geht insbesondere von der Überlegung aus, dass eine Maßgabe hinsichtlich eines Resthaltedrucks, wie sie im Stand der Technik für die Entlüftungsfunktionalität einer Druckluftversorgungsanlage erforderlich ist, gegebenenfalls hinderlich sein kann, wenn eine besonders schnelle Entlüftungsfunktionalität zu realisieren sein soll. Gleichwohl sollte der einfache Aufbau einer Magnetventilanordnung mit einem Steuerventil zur Steuerung eines Entlüftungsventils zur Beibehaltung einer schnellen Entlüftungsfunktionalität nicht über die Maßen kompliziert werden bzw. sollte vergleichsweise einfach gehalten werden.

Ausgehend von diesen Überlegungen hat die Erfindung erkannt, dass es erfindungsgemäß möglich ist, eine an die Steuerleitung angeschlossene Druck haltende pneumatische Einrichtung zur Verfügung zu stellen, mittels der ein zur Darstellung eines Steuerdrucks aus Balgdruck entbehrlich wird. Vielmehr sieht die Erfindung erfindungsgemäß eine druckhaltende pneumatische Einrichtung vor, die ausgebildet ist, den Drucksteueranschluss bei geöffnetem Ventilanschluss des Entlüftungsventils in der Entlüftungsleitung nicht nur unter Steuerdruck zu halten sondern vor allem unabhängig von einem Druck in der Entlüftungsleitung und der pneumatischen Hauptleitung unter Steuerdruck zu halten.

Dieses Konzept einer druckhaltenden pneumatischen Einrichtung, die insofern unabhängig von einem Balgdruck funktioniert, hat sich bewährt sowohl hinsichtlich einer Ausbildungsmöglichkeit zur Darstellung einer vergleichsweise hohen Druckwechselamplitude als auch einer schnellen Entlüftungsfunktionalität. Zudem lässt sich eine druckhaltende pneumatische Einrichtung in der Steuerleitung zusätzlich zur Magnetventilanordnung und/oder unter Modifikation der Magnetventilanordnung, insbesondere des Steuerventils, vergleichsweise einfach und ohne übermäßig hohen Modifikationsaufwand einer bislang bekannten Magnetventilanordnung realisieren.

Bevorzugte Weiterbildungen der Erfindung sind den Unteransprüchen zu entnehmen und geben im Einzelnen vorteilhafte Möglichkeiten an, das oben erläuterte Konzept im Rahmen der Aufgabenstellung sowie hinsichtlich weiterer Vorteile zu realisieren.

Vorzugsweise sind geeignete Druckhaltemittel bei der druckhaltenden pneumatischen Einrichtung vorgesehen, die vorzugsweise durch eine vergleichsweise einfache Modifikation der Magnetventilanordnung und/oder unter Nutzung von pneumatischen Komponenten der Peripherie der Druckluftversorgungsanlage wie beispielsweise einer Pneumatikanlage realisiert werden können. Unter Druckhaltemittel sind grundsätzlich alle einen Konstantdruck haltenden Mittel bzw. Mittel zur Realisierung eines Konstantdrucks zu verstehen. Unter Konstantdruck ist ein Druck zu verstehen ist, der unabhängig von einem Balgdruck ist, insbesondere unabhängig von einem Druck in der Entlüftungsleitung und der pneumatischen Hauptleitung ist.

Insbesondere kann das Konzept, vereinfacht gesagt, eine druckhaltende pneumatische Einrichtung mit einem Druckhaltemittel vorsehen, das zur Darstellung eines Steuerdrucks am Drucksteueranschluss des Entlüftungsventils in der Lage ist und einen Konstantdruck als Steuerdruck zur Verfügung stellen kann, der unabhängig von einem Balgdruck realisiert ist. Dazu eignen sich insbesondere pneumatische Sperrmittel zum Sperren der Steuerleitung, nachdem ein gewisser Steuerdruck aufgebaut ist und/oder pneumatische Quellen, die einer Steuerleitung vergleichsweise konstanten Druck unabhängig von einem Balgdruck zur Verfügung stellen können.

Im Rahmen einer besonders bevorzugten Weiterbildung ist die druckhaltende pneumatische Einrichtung ausgebildet, den Drucksteueranschluss bei geöffnetem Ventilanschluss des Entlüftungsventils in der Entlüftungsleitung derart unter Druck zu halten, dass ein Druck in der Entlüftungsleitung und der pneumatischen Hauptleitung variabel unter einen Resthaltedruck absinken kann. Unter einem Resthaltedruck ist insbesondere ein Restdruck zu verstehen, der durch eine Entlüftungs-Ventilfeder des Entlüftungsventils vorgegeben ist. Diese Weiterbildung ermöglicht es, insbesondere den Steuerdruck variabel einzustellen, d. h. insbesondere unabhängig von einem Balgdruck und insbesondere in einem Bereich unterhalb eines Restdrucks. Im Ergebnis kann dies im Rahmen einer weiteren bevorzugten Weiterbildung benutzt werden um eine Entlüftung der Druckluftversorgungsanlage bis auf einen Umgebungsdruck zu ermöglichen. Bevorzugt sieht eine Weiterbildung dazu vor, dass die druckhaltende pneumatische Einrichtung ausgebildet ist, den Drucksteueranschluss bei geöffnetem Ventilanschluss des Entlüftungsventils in der Entlüftungsleitung derart unter Druck zu halten, dass ein Druck in der Entlüftungsleitung und der pneumatischen Hauptleitung praktisch bis auf einen Umgebungsdruck absinken kann.

Im Rahmen einer bevorzugten weiterbildenden ersten Variante ist die druckhaltende pneumatische Einrichtung mit dem Steuerventil und einem Rückschlagventil gebildet. Mit dem Rückschlagventil lässt sich bevorzugt ein Steuerdruck in der pneumatischen Steuerleitung unabhängig von einem Druck in der Entlüftungsleitung und/oder der pneumatischen Hauptleitung auf einem geeigneten Niveau halten. Insbesondere ist das Rückschlagventil dazu zwischen dem Steuerventil, insbesondere einem ersten Steueranschluss desselben, und einem Zweiganschluss der Steuerleitung, also insbesondere in der Steuerleitung, an die pneumatische Hauptleitung angeschlossen. Insbesondere hat es sich zur Weiterbildung der ersten Variante als vorteilhaft erwiesen, dass die Steuerleitung von der pneumatischen Hauptleitung abzweigt, nämlich insbesondere an einem Zweiganschluss, wobei das Rückschlagventil zwischen dem Zweiganschluss und einem steuerdruckbeaufschlagbaren Ventilanschluss des Steuerventils angeschlossen ist. Bevorzugt lässt sich ein Zweiganschluss der vorgenannten Art zwischen einem Lufttrockner und dem Druckluftanschluss zur Pneumatikanlage in der pneumatischen Hauptleitung anordnen, insbesondere zwischen einer Drossel und dem Druckluftanschluss. Die Drossel weist bevorzugt eine Nennweite auf, die zum Einen eine ausreichende Druckwechselamplitude zur Regeneration des Trockners unterstützt und dennoch ausreichend groß dimensioniert ist, um eine vergleichsweise schnelle Entlüftung zu ermöglichen.

Das Steuerventil für die bevorzugte erste Variante ist vorteilhaft in Form eines 3/2-Wegeventils gebildet; vorteilhaft ist ein weiterer, insbesondere dritter, Ventilanschluss des Steuerventils an eine Umgebung angeschlossen. Als besonders vorteilhaft hat sich erwiesen, dass der weitere Ventilanschluss des Steuerventils in Form eines weiteren Entlüftungsanschlusses zur Umgebung gebildet ist. In einer Abwandlung kann an den weiteren Ventilanschluss eine weitere Entlüftungsleitung angeschlossen sein, die zur Entlüftungsleitung bzw. zum Entlüftungsanschluss führt.

Die erste weiterbildende Variante hat grundsätzlich den Vorteil, dass z.B. mittels eines 3/2-Wegeventils in einer ersten Schaltstellung ein Steuerdruck am Drucksteueranschluss des Entlüftungsventils aufgebaut und gehalten werden kann. Die erste Schaltstellung ist vorteilhaft eine bestromte Schaltstellung eines als Magnetventil ausgebildeten Steuerventils. In einer zweiten Schaltstellung des Steuerventils, vorzugsweise einer unbestromten, d. h. stromlosen Schaltstellung eines Magnetventils, ist die Steuerleitung vorteilhaft in einem von der pneumatischen Hauptleitung abzweigenden Teil gesperrt und vorteilhaft in einem an den Drucksteueranschluss des Entlüftungsventils anschließenden Teil entlüftet.

Im Rahmen einer zweiten bevorzugten Variante hat es sich als vorteilhaft erwiesen, dass die druckhaltende pneumatische Einrichtung mit dem Steuerventil und einem Druckspeicher gebildet ist. Vorteilhaft ist die Steuerleitung an einen Druckspeicher angeschlossen und/oder zweigt von einer zu einem Druckspeicher führenden Speicher-Zweigleitung ab. Die Speicher-Zweigleitung und der Druckspeicher sind bevorzugt Komponenten einer Pneumatikanlage des pneumatischen Systems. Dies hat den Vorteil, dass eine Modifikation eines bestehenden pneumatischen Leitungssystems vergleichsweise einfach realisierbar bzw. unter Nutzung bisheriger pneumatischer Leitungen umgesetzt werden kann. Insbesondere ist vorgesehen, dass die Steuerleitung an einen Druckspeicher angeschlossen ist und frei von einem Anschluss zur pneumatischen Hauptleitung ist.
Ein Druckspeicher ermöglicht es, mit vergleichsweise wenig Aufwand, unabhängig von einem Druck in der Entlüftungsleitung und der pneumatischen Hauptleitung einen Steuerdruck darzustellen. Bei geöffnetem Ventilanschluss des Entlüftungsventils in der Entlüftungsleitung kann die Hauptleitung und die Entlüftungsleitung, insbesondere ein Balg mit variablem Restdruck, entlüftet werden, insbesondere bis auf einen Umgebungsdruck entlüftet werden.

Insbesondere hat es sich als vorteilhaft erwiesen, dass das Steuerventil in Form eines 3/2-Wegeventils gebildet ist, wobei ein weiterer Ventilanschluss des Steuerventils an eine Umgebung angeschlossen ist. Grundsätzlich haben sich hier die gleichen Vorteile bewährt wie bei der ersten weiterbildenden Variante. Im Rahmen der zweiten weiterbildenden Variante hat es sich darüber hinaus als vorteilhaft erwiesen, dass der weitere Ventilanschluss des Steuerventils an den Entlüftungsanschluss zur Umgebung angeschlossen ist. Gleichwohl kann auch in diesem Fall der weitere Ventilanschluss als weiterer Entlüftungsanschluss realisiert sein.

Im Rahmen einer dritten weiterbildenden Variante kann die druckhaltende pneumatische Einrichtung mit dem Steuerventil selbst gebildet sein. Im Rahmen der dritten weiterbildenden Variante wurde erkannt, dass sich das Steuerventil selbst vergleichsweise einfach modifizieren lässt, insbesondere in Abweichung von einem 3/2-Wegeventil. Insbesondere können die Vorteile eines 3/2-Wegeventils als Steuerventil zugunsten einer vereinfachten mechanischen Ausführung des Steuerventils aufgegeben werden. Insbesondere kann im Rahmen der dritten weiterbildenden Variante das Steuerventil vorzugsweise zwei Ventilanschlüsse aufweisen, die in der Steuerleitung angeschlossen sind. Bevorzugt ist das Steuerventil frei von einem Ventilanschluss zur Umgebung. Insbesondere ist das Steuerventil in Form eines 2/2-Wegeventils gebildet. Die dritte weiterbildende Variante folgt der Erkenntnis, dass eine Entlüftung der Steuerleitung auch in die pneumatische Hauptleitung und über den Lufttrockner erfolgen kann.

Insbesondere kann eine elektromagnetische Funktionalität und/oder ein Ansteuerungsablauf für das Steuerventil zur Bildung einer vorteilhaften druckhaltenden pneumatischen Einrichtung gemäß der dritten Variante verbessert ausgebaut werden. Insbesondere hat es sich als vorteilhaft erwiesen, dass das Steuerventil elektromagnetisch intervall-steuerbar ausgebildet ist. Mit intervall-steuerbar ist vorliegend gemeint, dass ein Öffnungs- und Schließvorgang des Steuerventils,--insbesondere durch ein Steuerpuls-Paar initiiert; also z.B. eine Kombination eines Ein- und Ausschaltvorgangs für einen Strom einer Magnetspule-- zeitlich eng benachbart erfolgt; nämlich derart, dass ein ausreichender Steuerdruck am Drucksteueranschluss des Entlüftungsventils aufgebaut werden kann und unmittelbar danach der am Steueranschluss anschließende zweite Teil der Steuerleitung geschlossen werden kann. Im Rahmen einer solchen als Intervall-Steuerfunktionalität bezeichneten Ansteuerung des Steuerventils z.B. eines vorgenannten 2/2-Wegeventils lässt sich --wiederum unabhängig von einem Druck in der Entlüftungsleitung und der pneumatischen Hauptleitungder Drucksteueranschluss des Entlüftungsventils bei geöffnetem Ventilanschluss des Entlüftungsventils unter Steuerdruck halten.

Insbesondere sieht die dritte weiterbildende Variante vor, dass mittels der elektromagnetischen Intervall-Steuerfunktionalität zu Beginn eines Steuerintervalls zum Aufbau des Steuerdrucks auf den Drucksteueranschluss des Entlüftungsventils in der Steuerleitung die zwei Ventilanschlüsse des Steuerventils zu öffnen sind; am Ende des Steuerintervalls sind zum Halten des Drucksteueranschlusses unter Steuerdruck die zwei Ventilanschlüsse zu schließen. Vereinfacht gesagt, wird das Steuerventil, vorzugsweise in Form eines 2/2-Wegeventils, als Magnetventil ausgebildet und mittels eines das Steuerintervall begrenzenden Steuerpuls-Paares angesteuert, derart dass das Steuerventil zu Beginn des Steuerintervalls öffnet und am Ende des Steuerintervalls schließt. Die Dauer eines Steuerintervalls sollte gerade ausreichend sein, um den Steuerdruck aufzubauen und kann bevorzugt deutlich unterhalb von 1s liegen.

Im Rahmen einer ersten Abwandlung der dritten weiterbildenden Variante kann die Steuerleitung an einen Druckspeicher angeschlossen sein, insbesondere von einer zu einem Druckspeicher führenden Speicher-Zweigleitung, vorzugsweise unmittelbar, abgezweigt sein. Im Rahmen einer zweiten Abwandlung der dritten weiterbildenden Variante kann die Steuerleitung an einen Balg angeschlossen sein, insbesondere von einer zu einem Balg führenden Balg-Zweigleitung, vorzugsweise unmittelbar, abgezweigt sein. Diese Abwandlungen weisen ähnliche Vorteile auf, wie sie im Rahmen der zweiten weiterbildenden Variante erläutert wurden.

Im Rahmen einer dritten Abwandlung der dritten weiterbildenden Variante hat es sich als vorteilhaft erwiesen, dass die Steuerleitung an einen Luftverdichter angeschlossen ist, insbesondere unmittelbar am Luftverdichter und/oder an einer am Luftverdichter angeschlossenen Zweigleitung, vorzugsweise unmittelbar, angeschlossen ist. Die Steuerleitung kann auch, vorzugsweise unmittelbar, von der pneumatischen Hauptleitung abzweigen. Im Rahmen der dritten Abwandlung wurde erkannt, dass über die Hauptleitung die Druckamplitude eines Luftverdichters, d. h. aus der Druckluftzuführung genutzt werden kann, um einen definierten Steuerdruck aufzubauen. Hier ergeben sich zusätzlich verschiedene vorteilhafte Möglichkeiten, den Steuerdruck situationsabhängig zu definieren, beispielsweise über eine vorbestimmte Festlegung der Intervalllänge des Steuerintervalls und/oder der Verdichtertätigkeit.

Die vorgenannten drei Abwandlungen und deren Ausgestaltungen können allein oder in Kombination realisiert werden.

Ausführungsbeispiele der Erfindung werden nun nachfolgend anhand der Zeichnung im Vergleich zum Stand der Technik, welcher zum Teil ebenfalls dargestellt ist, beschrieben. Diese soll die Ausführungsbeispiele nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in' der Zeichnung sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im folgenden gezeigten und· beschriebenen bevorzugten Ausführungsform oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Weitere Vorteile, Merkmale und Einzelheiten der Erfindung ergeben sich aus der nachfolgenden Beschreibung der bevorzugten Ausführungsbeispiele.

Im Einzelnen zeigt die Zeichnung in:

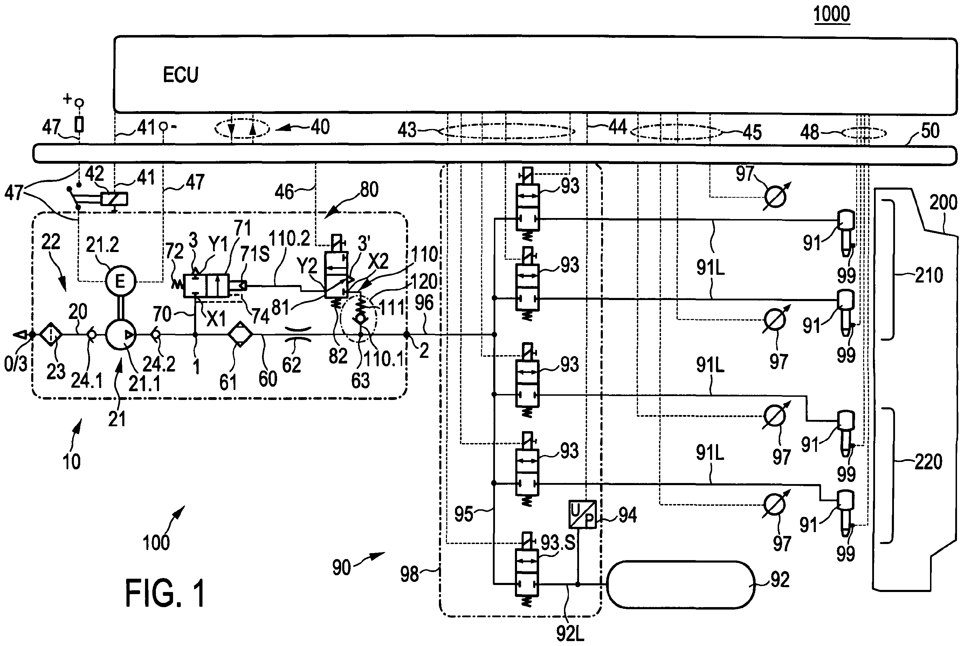

Fig. 1 eine bevorzugte Ausführungsform eines pneumatischen Systems mit einer Druckluftversorgungsanlage und einer Pneumatikanlage, wobei die Druckluftversorgungsanlage mit einer Magnetventilanordnung mit einem Steuerventil zur Steuerung eines Entlüftungsventils versehen ist, wobei zusätzlich eine druckhaltende pneumatische Einrichtung als Kombination des Steuerventils mit einem Rückschlagventil in der Steuerleitung vorgesehen ist;

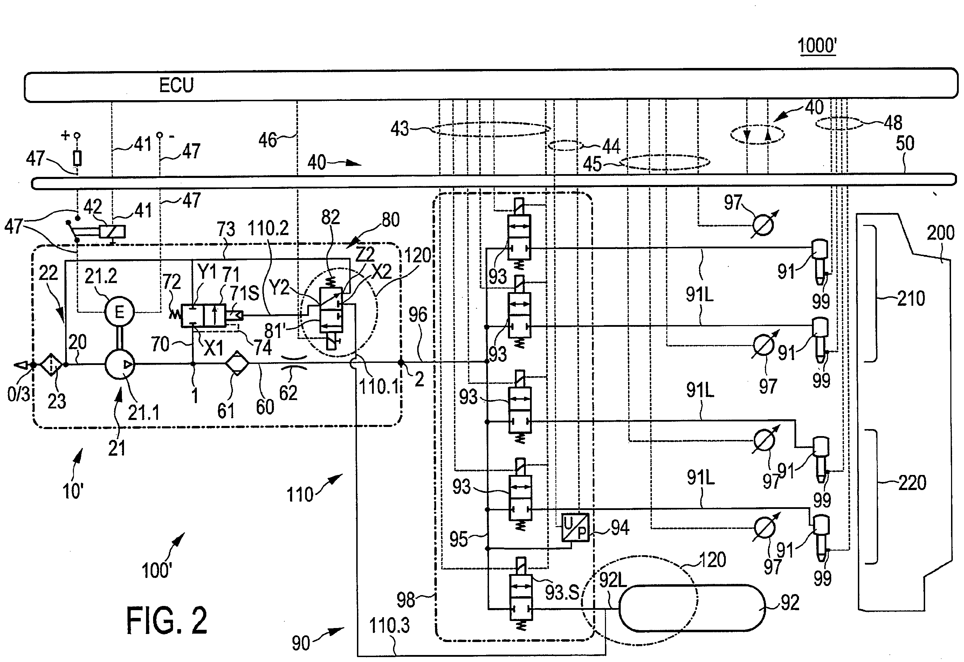

Fig. 2 eine bevorzugte Ausführungsform eines pneumatischen Systems mit einer Druckluftversorgungsanlage und einer Pneumatikanlage, wobei die Druckluftversorgungsanlage mit einer Magnetventilanordnung mit einem Steuerventil zur Steuerung eines Entlüftungsventils versehen ist, wobei eine druckhaltende pneumatische Einrichtung in Form einer Kombination des Steuerventils mit einem Druckspeicher der Pneumatikanlage gebildet ist;

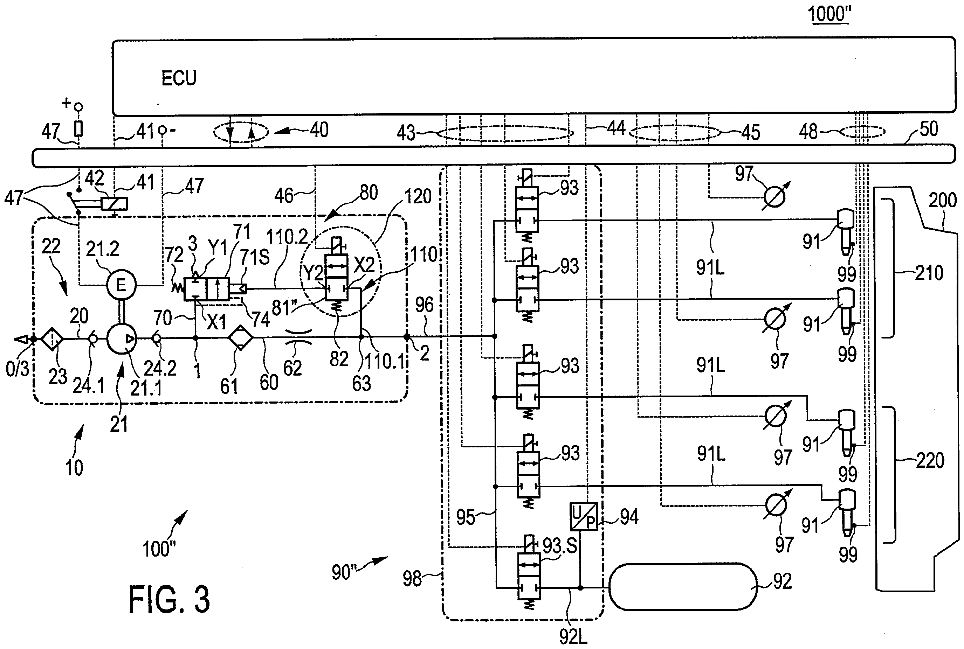

Fig. 3 eine bevorzugte Ausführungsform eines pneumatischen Systems mit einer Druckluftversorgungsanlage und einer Pneumatikanlage, wobei eine Magnetventilanordnung mit einem Steuerventil zur Steuerung eines Entlüftungsventils vorgesehen ist und eine druckhaltende pneumatische Einrichtung mittels einem modifizierten Steuerventil in Form eines 2/2-Wegeventils mit einer elektromagnetischen Intervall-Steuerfunktionalität derart gebildet ist, dass das 2/2-Wegeventil zum Aufbau des Steuerdrucks und anschließenden Halten des Steuerdrucks kurzzeitig zu öffnen und anschließend zu schließen ist;

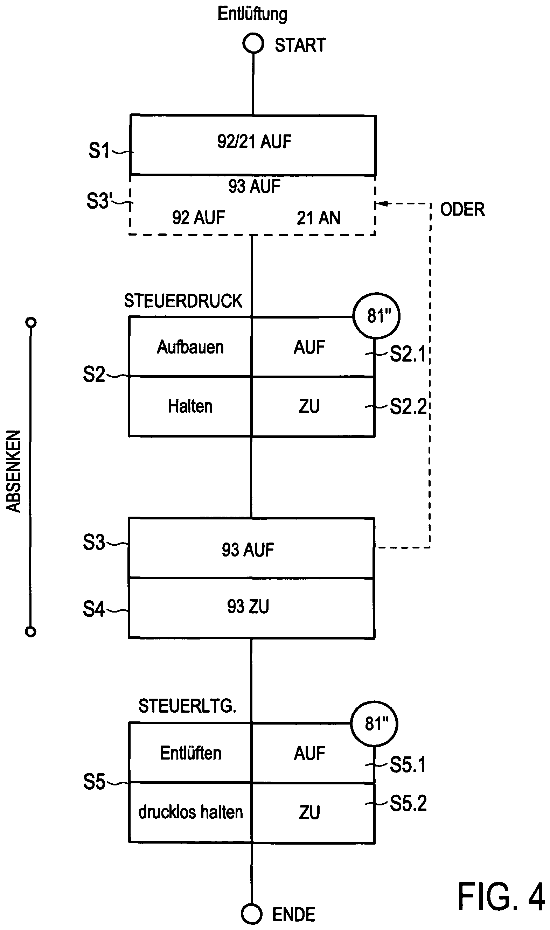

Fig. 4 schematisch den grundsätzlichen Verlauf eines Entlüftungsvorgangs für eine Druckluftversorgungsanlage der Fig. 3 mittels eines Steuerventils in Form eines 2/2 Wegeventils.

Fig. 1 zeigt ein pneumatisches System 100 mit einer Druckluftversorgungsanlage 10 und einer Pneumatikanlage 90 für ein symbolisch gezeigtes Fahrzeug 1000. Das pneumatische System 100 ist zur Ansteuerung über eine Steckverbindung 50 und einen Datenbus 40 an eine ECU als elektronische Fahrzeugsteuerung angebunden, wobei diverse mit 41, 42, 43, 44, 45, 46, 47, 48 bezeichnete und dünn gezeichnete elektrische Steuer- und Sensorleitungen bzw. Stromleitungen für die Druckluftversorgungsanlage 10, die Pneumatikanlage 90 sowie eine Sensorik und Relaisschaltung vorgesehen sind.

Konkret ist die ECU zur Überwachung und Ansteuerung des pneumatischen Systems 100 über den Datenbus 40 sowie die vorgenannten elektrischen Steuer- und Sensorleitungen und eine Steckverbindung 50 angebunden; zu den elektrischen Steuerleitungen zählen erste elektrische Steuerleitungen 43 zur Beaufschlagung von Magnetspulen der Magnet-Wegeventile 93 in der Pneumatikanlage 90 sowie eine zweite elektrische Steuerleitung 46 zur Beaufschlagung der Magnetspule eines Steuerventils 81, 81', 81" in Form eines Magnet-Wegeventils einer Magnetventilanordnung 80 in der Druckluftversorgungsanlage 10, 10', 10". Die ersten elektrischen Steuerleitungen 43 dienen der steuernden Bestromung der als Magnetventile gebildeten Balg- und Speicherventile in Form von Wegeventilen 93, 93.S. Die zweite elektrische Steuerleitung 46 dient der steuernden Bestromung des als Magnetventil gebildeten Steuerventils 81, 81', 81".

Darüber hinaus sind erste elektrische Sensorleitungen 45 zu Höhensensoren 97 in der Pneumatikanlage 90 und eine zweite elektrische Sensorleitung 44 zu einem Drucksensor 94 in einer Speicher-Zweigleitung 92L zu einem Druckspeicher 92 vorgesehen. Die ersten elektrischen Sensorleitungen 45 sind an die Höhensensoren 97 angeschlossen. Die zweite elektrische Sensorleitung 44 ist an den Drucksensor 94 angeschlossen, der in der Speicher-Zweigleitung 92L einen Druck des Druckspeichers 92 misst. Zusätzlich können auch dritte elektrische Sensorleitungen 48 zu Balg-Druck-Sensoren 99 vorgesehen sein.

Außerdem sind auch Stromleitungen 47 für sonstige elektromagnetische Komponenten, wie die Stromleitung 47 mit einem Relais 42 zum Betrieb des Elektromotors 21.2 einer Verdichtereinheit 21 und eine elektrische Steuerleitung 41 zum Relais 42 vorgesehen. Im vorliegenden Fall ist der Elektromotor 21.2 über die als elektrische Schaltleitung dienende Stromleitung 47 und die elektrische Steuerleitung 41 und das steuerbare Relais 42 ansteuerbar.

Diese und die nachfolgend beschriebene grundsätzliche Maßgabe zum Aufbau des pneumatischen Systems mit der Druckluftversorgungsanlage 10 und der Pneumatikanlage 90 gilt auch für die in Fig. 1, Fig. 2 und Fig. 3 gezeigten Varianten eines pneumatischen Systems 100, 100', 100" mit Druckluftversorgungsanlage 10, 10', 10" bzw. pneumatischem System 90, 90', 90". Nachfolgend sind für identische oder ähnliche Merkmale bzw. Teile identischer oder ähnlicher Funktion der Einfachheit halber gleiche Bezugszeichen verwendet worden, wo dies sinnvoll und zweckmäßig ist; gleichwohl ist zu verstehen, dass für die Druckluftversorgungsanlagen 10, 10', 10" bzw. Pneumatikanlagen 90, 90', 90" unterschiedliche Varianten von Komponenten und Bauteilen zum Einsatz kommen können.

Bezug nehmend auf Fig. 1 zeigt diese eine Druckluftversorgungsanlage 10 zum Betreiben der Pneumatikanlage 90; vorliegend eine Luftfederanlage eines mit Frontachse 210 und Rückachse 220 symbolisch dargestellten Fahrzeugaufbaus 200 eines Fahrzeugs 1000. Die Druckluftversorgungsanlage 10 hat eine Druckluftzuführung 1 und einen Druckluftanschluss 2, wobei der Druckluftzuführung 1, Druckluft über eine Luftzuführung 22 zuführbar ist. Die Druckluft kann in Befüllrichtung zwischen der Druckluftzuführung 1 und dem Druckluftanschluss 2 über eine pneumatische Hauptleitung 60 geführt werden und der Pneumatikanlage 90 zugeführt werden. In der Luftzuführung 22 ist dazu in einer Luftzuführungsleitung 20 ein zur Ansaugung von Luft vorgesehener Luftanschluss 0, ein Filter 23 und eine Verdichtereinheit 21 angeordnet. Die Verdichtereinheit 21 ist vorliegend zwischen einem ersten und zweiten Rückschlagventil 24.1, 24.2 angeordnet, wobei in der Verdichtereinheit 21 ein Kompressor 21.1 über einen Elektromotor 21.2 antreibbar ist.

In der Pneumatikhauptleitung 60 ist ein Lufttrockner 61 und eine Drossel 62 angeordnet. Von der pneumatischen Hauptleitung 60 geht an der Druckluftzuführung 1 eine Entlüftungsleitung 70 ab, die sich über ein Entlüftungsventil 71 zu einem Entlüftungsanschluss 3 fortsetzt. Vorliegend ist der Entlüftungsanschluss 3 direkt mit einem entlüftungsseitigen zweiten Entlüftungs-VentilanschlussY1 des Entlüftungsventils 71 gebildet. Der dem zweiten Entlüftungs-VentilanschlussY1 des Entlüftungsventils 71 gegenüberliegende druckseitige erste Entlüftungs-VentilanschlussX1 schließt an die Entlüftungsleitung 70 an. Das Entlüftungsventil 71 ist vorliegend als ein 2/2-Relaiswegeventil gebildet, das einen Drucksteueranschluss 71S aufweist. Das Entlüftungsventil weist einen ersten Entlüftungs-VentilanschlussX1 auf, der über die Entlüftungsleitung 70 an die Druckluftzuführung 1 angeschlossen ist. Der zweite Entlüftungs-VentilanschlussY1 ist als Entlüftungsanschluss 3 gebildet oder in einer Abwandlung an einen Entlüftungsanschluss 3 angeschlossen.

Außerdem ist ein, insbesondere Relais-, Druckbegrenzer 74 am Entlüftungsventil 71 derart vorgesehen, dass unter Abgreifen eines Drucks in der Entlüftungsleitung 70 über den Druckbegrenzer 74 der Druck zum Öffnen des Entlüftungsventils 71 beschränkt ist. Auf diese Weise kann selbst bei einem vergleichsweise hohen Betriebsdruck eine gewisse Variabilität bzw. Toleranz hinsichtlich einer Druckbegrenzung erreicht werden. Vorteilhaft ist vor allem ein stromgesteuerter Druckbegrenzer 74, der vorliegend dadurch realisiert ist, dass der Schaltpunkt des Entlüftungsventils 71 abhängig von der Stromstärke eines Steuerstroms für das Steuerventil 81 variabel einstellbar ist. D. h. die Stromstärke im Magnetteil (Spule) im Steuerventil 81 bestimmt den Schaltpunkt eines Pneumatikteils (Entlüftungsventil 71 als Relaisventil). Je nach Fahrzeugsituation, Temperatur des Systems oder sonstiger druckrelevanter Systembelange kann der Schaltpunkt des Pneumatikteils, also des als Relaisventil gebildeten Entlüftungsventils 71, mit der wirkenden Stromstärke variabel eingestellt werden. Durch den, insbesondere stromgesteuerten, Druckbegrenzer 74 ist sichergestellt, dass der Galeriedruck den statischen Öffnungsdruck eines als Magnetventil ausgebildeten Balgventils in Form eines Wegeventils 93 (auch Niveauregelventil genannt) und einen Innendruck eines Balgs 91 nicht übersteigt. Eine Druckmessung kann außer in der Galerie 95, wie vorliegend an einem Speicher 92 --nämlich über den Drucksensor 94-- erfolgen.

Im vorliegenden Fall ist eine Magnetventilanordnung 80 mit dem Steuerventil 81 als Magnetventil zur Steuerung eines Entlüftungsventils 71 als Relaisventil vorgesehen. Das Steuerventil 81 ist dabei mit einem ersten Ventilanschluss X2 und einem zweiten Steuer-Ventilanschluss Y2 in einer pneumatischen Steuerleitung 110 angeschlossen. Der erste Steuer-Ventilanschluss X2 ist über einen ersten Teil 110.1 der pneumatischen Steuerleitung 110 an den Zweiganschluss 63 der pneumatischen Hauptleitung 60 angeschlossen. Der zweite Steuer-Ventilanschluss Y2 ist an den Drucksteueranschluss 71S des Entlüftungsventils 71 über einen zweiten Teil 110.2 der pneumatischen Steuerleitung 110 angeschlossen. Der dritte Steuer-Ventilanschluss Z2 des Steuerventils 81 ist als ein weiterer Entlüftungsanschluss 3' zur Umgebung gebildet. In einer Abwandlung kann der Entlüftungsanschluss 3' auch über eine weiter --in Fig. 1 nicht gezeigte Entlüftungsleitung mit dem Entlüftungsanschluss 3 zur Umgebung verbunden werden, oder beispielsweise auch über die Luftzuführungsleitung 20 und den Filters 23 an den Luftzuführungsanschluss 0 angebunden werden.

Die Pneumatikanlage 90 weist in einem Ventilblock 98 angeordnete, vorliegend fünf Niveauregelventile auf, die als Balg- oder Speicherventil in Form eines Wegeventils 93, nämlich in Form eines Magnet-Wegeventils gebildet sind; nämlich als ein 2/2-Magnet-Wegeventil. Im Ventilblock 98 sind die als Magnet-Wegeventile ausgebildeten Balg- oder Speicherventile 93 über eine Galerie 95 miteinander verbunden, wobei die Galerie 95 über eine weitere Pneumatikleitung 96 an die pneumatische Hauptleitung 60 über den Druckluftanschluss 2 angebunden ist. Die Bälge 91 bzw. der Druckspeicher 92 ist über Balg-Zweigleitungen 91L bzw. eine Speicher-Zweigleitung 92L an die Balg- oder Speicherventile, d. h. Wegeventile 93, 93.S angeschlossen. Die als Balg- oder Speicherventile dienenden Wegeventile 93, 93.S sind den Bälgen 91 bzw. dem Druckspeicher 92 vorgeschaltet sodass diese gegen die Galerie 95 absperren oder zur Galerie 95 öffnen können. Einem Balg 91 ist jeweils ein Höhensensor 97 zugeordnet, dessen Daten über eine Sensorleitung 45 und die Steckverbindung 50 bzw. den Datenbus 40 insbesondere an die ECU weitergebbar sind.

Zum Betrieb der Pneumatikanlage 90 lassen sich -- je nach gemessenem Höhenniveau-- die Luftfedern bildenden Bälge 91 aus der Druckluftversorgungsanlage 10 mit Druckluft über den Druckluftanschluss 2 befüllen; dies dient der Niveauanhebung des Fahrzeugaufbaus 200. Umgekehrt lassen sich die Luftbälge 91 über den Druckluftanschluss 2 in Gegenrichtung entlüften zu einem Entlüftungsanschluss 3, so dass sich das Niveau des Fahrzeugsaufbaus 200 unter Entweichen von Druckluft aus den Bälgen 91 senkt. Zum Befüllen der Pneumatikanlage 90 über den Druckluftanschluss 2 befindet sich das Entlüftungsventil 71 in dem in Fig. 1, Fig. 2 und Fig. 3 gezeigten stromlos geschlossenen Zustand gegenüber dem Entlüftungsanschluss 3. Ebenso ist der erste und zweite Steuer-Ventilanschluss X2, Y2 pneumatisch getrennt, d. h. der erste Teil 110.1 der pneumatischen Steuerleitung 110 ist gegen den zweiten Teil 110.2 der pneumatischen Steuerleitung 110 geschlossen; dies hat die unangesteuert geschlossene Stellung des Entlüftungsventils 71 zur Folge.

Zum Entlüften der Pneumatikanlage 90 wird eine geeignete Bestromung der Magnetspule des Steuerventils 81 mittels einem über die elektrische Steuerleitung 46 geführten Stromsignal vorgenommen; als Folge wird die Magnetspule des Steuerventils 81 bestromt und gegen den Federdruck der Steuer-Ventilfeder 82 geöffnet. Damit wird die pneumatische Steuerleitung 110 über das Steuerventil 81 geöffnet, d. h. der erste Teil 110.1 der pneumatischen Steuerleitung 110 wird mit dem zweiten Teil 110.2 der pneumatischen Steuerleitung 110 zum Drucksteueranschluss 71S geöffnet. Ein in der pneumatischen Steuerleitung 110 anliegender Steuerdruck wird am Drucksteueranschluss 71S aufgebaut und wirkt gegen die Kraft der Entlüftungs-Ventilfeder 72 des Entlüftungsventils 71, sodass schließlich der erste Entlüftungs-Ventilanschluss X1 zum zweiten Entlüftungs-Ventilanschluss Y1 des Entlüftungsventils 71 geöffnet wird; also die Entlüftungsleitung 70 und ein Ausgang des Lufttrockners 61 zum Entlüftungsanschluss 3 geöffnet wird. Bei derart geöffneten Ventilanschlüssen X1, Y1 des Entlüftungsventils 71 in der Entlüftungsleitung 70 wird vorliegend der Drucksteueranschluss 71S unter Steuerdruck gehalten, bereits aufgrund des in den Bälgen 91 vorhandenen Drucks, der bei geöffneten Wegeventil 93, 93.S, d. h. Balg- oder Speicherventil, in der pneumatischen Hauptleitung 60 anliegt und damit als Steuerdruck in der pneumatischen Steuerleitung 110 zur Verfügung steht.
Darüber hinaus ist gemäß dem Konzept der vorliegenden Erfindung in den im weiteren erläuterten Ausführungsformen vorgesehen, dass bei geöffneten Ventilanschlüssen X1, Y1 des Entlüftungsventils in der Entlüftungsleitung 70 der Drucksteueranschluss 71S unter Steuerdruck gehalten wird; dies unabhängig von einem Druck in der Entlüftungsleitung 70 und der pneumatischen Hauptleitung 60. Insbesondere kann mittels einer im Einzelnen in Bezug auf Fig. 1 und Fig. 2 und Fig. 3 erläuterten druckhaltenden pneumatischen Einrichtung 120 der Steuerdruck gehalten werden, obwohl ein Druck in der Entlüftungsleitung und der pneumatischen Hauptleitung 60 unter einen Resthaltedruck, d. h. einen durch die Entlüftungs-Ventilfeder 72 des Entlüftungsventils 71 vorgegebenen Druck absinken kann. Dazu ist vorliegend der erforderliche Steuerdruck in der pneumatischen Steuerleitung 110 variabel wählbar, insbesondere variabel einstellbar über die Entlüftungs-Ventilfeder 72 des Entlüftungsventils 71. So ist gemäß allen im Folgenden erläuterten Ausführungsformen gewährleistet, dass der Druck in der Entlüftungsleitung 70 und der pneumatischen Hauptleitung 60 praktisch bis auf einen Umgebungsdruck absinken kann, sodass die Bälge 91 bis auf eine Umgebungsdruck entlüftet werden können.

Dazu sieht die Ausführungsform der Fig. 1 in der pneumatischen Steuerleitung 110, nämlich hier im ersten Teil 110.1 der pneumatischen Steuerleitung 110, zwischen dem Zweiganschluss 63 und dem ersten Steuer-Ventilanschluss X2 des Steuerventils 81, ein Rückschlagventil 111 vor.

Dazu sieht die in Fig. 2 dargestellte Ausführungsform vor, dass die pneumatischen Steuerleitung 110 nicht an die pneumatische Hauptleitung 60 angeschlossen ist, sondern sich vielmehr anschließend an den ersten Teil 110.1 in einem dritten Teil 110.3 bis an eine Speicher-Zweigleitung 92L fortsetzt und dort angeschlossen ist, d. h. an einen Druckspeicher 92 anschließt.

Dazu sieht die in Fig. 3 gezeigte Ausführungsform vor, dass das Steuerventil 81 modifiziert wird in Form eines 2/2-Wegeventils, das in Fig. 3 gezeigt ist und dessen Betrieb gemäß Fig. 4 näher beschrieben ist.

Bezugnehmend auf Fig. 1 wird zum Entlüften die Spule des als 3/2-Ventil ausgebildeten Steuerventils 81 bestromt und das Steuerventil 81 geht von dem in Fig. 1 gezeigten stromlosen Zustand in den bestromten Zustand über, bei dem der erste Steuer-Ventilanschluss X2 mit dem zweiten Steuer-Ventilanschluss Y2 pneumatisch verbunden ist; d. h. der erste Teil 110.1 der pneumatischen Steuerleitung 110 und der zweite Teil 110.2 der pneumatischen Steuerleitung 110 sind zum Drucksteueranschluss 71S miteinander verbunden. Das 3/2-Wegeventil wird also geschaltet zum Öffnen des Steuerventils 81 in der pneumatischen Steuerleitung 110. Bei derart geöffneten Ventilanschlüssen X1, Y1 des Entlüftungsventils 71 in der Entlüftungsleitung 70 wird vorliegend der Drucksteueranschluss 71S unter Steuerdruck gehalten, bereits aufgrund des in den Bälgen 91 vorhandenen Drucks, der bei geöffneten Niveauregelventil, d. h. als Balg- oder Speicherventil dienendem Wegeventil 93, in der pneumatischen Hauptleitung 60 anliegt und damit als Steuerdruck in der pneumatischen Steuerleitung 110 zur Verfügung steht. Das in Fig. 1 dargestellte Rückschlagventil 111 in dem ersten Teil 110.1 der als Vorsteuerkanal dienenden pneumatischen Steuerleitung 110 hält den einmal in die pneumatische Steuerleitung 110 eingespeisten Steuerdruck auf konstantem Niveau, so dass der Relaiskolben des Entlüftungsventil 71 in Folge des am Drucksteueranschluss 71S --auch unabhängig von einem Druck in der Entlüftungsleitung 70 und der pneumatischen Hauptleitung 60-- gehaltenen Steuerdrucks aktuiert bleibt und das Entlüftungsventil 71 in der Entlüftungsleitung 70 geöffnet bleibt. Auf diese Weise kann die Pneumatikanlage 90 über die Drossel 62 den Trockner 61 und schließlich die Entlüftungsleitung 70 zum Entlüftungsanschluss 3 entlüftet werden. Die Nennweite der Drossel 62 ist dazu in einer zur Regeneration des Lufttrockners 61 vorteilhaften Größe ausgelegt.

Zum Beenden des so geschalteten Entlüftungsvorgangs werden zunächst die als, hier Magnet-, Wegeventil 93 ausgebildeten Balgventile geschlossen und die Bestromung der Magnetspule des als 3/2-Ventil ausgebildeten Steuerventils 81 wird aufgehoben, so dass dieses unter Wirkung der Steuer-Ventilfeder 82 in den stromlosen in Fig. 1 geschalteten Zustand zurückfällt. Das 3/2-Wegeventil fällt in seinen in Fig.1 gezeigten Zustand zurück und der dritte Steuer-Ventilanschluss Z2 und der zweite Steuer-Ventilanschluss Y2 des 3/2-Wegeventils wird pneumatisch miteinander zum Öffnen des Steuerventils 81 in der pneumatischen Steuerleitung 110 verbunden. Dadurch wird der Vorsteuerkanal, insbesondere der zweite Teil 110.2 der pneumatischen Steuerleitung 110 auf Umgebungsdruck entlüftet und die Entlüftungs-Ventilfeder 72 des Entlüftungsventils 71 schließt den Relaiskolben, so dass das Entlüftungsventil 71 in den in Fig. 1 gezeigten nicht druckbeaufschlagten Zustand zurückfällt und die Entlüftungsleitung 70 schließt, d. h. den ersten Entlüftungs-Ventilanschluss X1 und zweiten Entlüftungs-Ventilanschluss Y1 in der Entlüftungsleitung 70 trennt.

Die in Fig. 2 dargestellte Ausführungsform nutzt den im Druckspeicher 92 zur Verfügung stehenden Vorratsdruck und kann diesen über die Speicher-Zweigleitung 92L und den dritten Teil 110.3 der pneumatischen Steuerleitung 110 in die als Vorsteuerkanal dienende pneumatische Steuerleitung 110 einspeisen. Damit liegt ein ausreichender Steuerdruck am Drucksteueranschluss 71S des Entlüftungsventils 70 an, um den Relaiskolben des Entlüftungsventils 71 zu öffnen. Die in Fig. 2 dargestellte Ausführungsform nutzt damit in vorteilhafter Weise ein bei pneumatischen Systemen 100' vorhandenen Druckspeicher 92. Grundsätzlich kann der in Fig. 2 dargestellte Druckspeicher 92 auch symbolisch insofern verstanden werden, als dass dieser für jede Art einer Konstantdruckquelle stehen kann bzw. durch jede Art einer Druckquelle ersetzt werden kann, die in der Lage ist, einen Steuerdruck aufzubauen, der unabhängig von einem Druck in der Entlüftungsleitung 70 und der pneumatischen Hauptleitung 60 gehalten werden kann. Dazu kann beispielsweise auch ein Luftverdichter 21 dienen. So kann beispielsweise im Falle geringer Systemdrücke, gegebenenfalls auch im Falle eines geringen Drucks im Druckspeicher 92, durch eine kurze Betätigung des Luftverdichters 21 der benötigte Steuerdruck über die Druckluftzuführung zur Verfügung gestellt werden. In der in Fig. 2 dargestellten Ausführungsform kann beispielsweise ein geeigneter Druck im Druckspeicher 92 durch Betätigung des Luftverdichters 21 wieder aufgebaut werden. Dazu ist das als Speicherventil dienende Wegeventil 93.S in der Speicher-Zweigleitung 92L zu öffnen. In dem Fall befüllt bei Betätigung des Luftverdichters 21 aus der Druckluftzuführung die Tätigkeit des Kompressors 21.1 sowohl den Druckspeicher 92 als auch den Vorsteuerkanal in Form der pneumatischen Steuerleitung 110 mit ausreichendem Steuerdruck. Es hat sich als vorteilhaft erwiesen, dass ein Drucksensor 94 vorgesehen ist, um über eine geeignete Sensorleitung 44 der ECU, jedenfalls an der Steckverbindung 50 und einem sonstigen Datenbus 40, eine Signalisierung zur Verfügung zu stellen, die den Druck im Druckspeicher 92 anzeigt. Dadurch kann eine druckabhängige Ansteuerung des Luftverdichters 21 zur Darstellung eines Steuerdrucks in der pneumatischen Steuerleitung 110 realisiert werden. Bei ausreichend hohen Drücken, beispielsweise oberhalb eines Schwelldrucks, kann der Luftverdichter 21 unbetätigt bleiben, da ein geeigneter Steuerdruck in der pneumatischen Steuerleitung 110 aus dem Druckspeicher 92 zur Verfügung gestellt ist. Liegt ein Druck im System unterhalb eines Schwelldrucks kann bei solchen kleinen Drücken der Luftverdichter 21 kurzzeitig betätigt werden und über ein als Speicherventil dienendes Wegeventil 93.S kann der Druckspeicher 92 auf ein ausreichendes Druckniveau gehoben werden, um einen zur Betätigung des Relaiskolbens des Entlüftungsventils 71 ausreichenden Steuerdruck zur Verfügung zu stellen.

In dem in Fig. 2 gezeigten Zustand ist das Steuerventil 81 in einem stromlosen Zustand, so dass der erste Steuer-Ventilanschluss X2 vom zweiten Steuer-Ventilanschluss Y2 pneumatisch getrennt ist und im ersten und dritten Teil 110.1, 110.3 der pneumatischen Steuerleitung 110 liegt ein ausreichender Steuerdruck an dem ersten Steuer-Ventilanschluss X2 an.

Zur Einleitung eines Entlüftungsvorgangs wird das Steuerventil 81 unter Bestromung der Magnetspule über die elektrische Steuerleitung 46 in den bestromten Zustand geschaltet. D. h. die weitere Entlüftungsleitung 73 wird am dritten Steuer-Ventilanschluss Z2 pneumatisch geschlossen und der erste Steuer-Ventilanschluss wird zum zweiten Steuer-Ventilanschluss X2, Y2 geöffnet, so dass ein erster, zweiter und dritter Teil 110.1, 110.2, 110.3 der pneumatischen Steuerleitung 110 miteinander pneumatisch verbunden sind und folglich der Steuerdruck am Drucksteueranschluss 71S anliegt. Dadurch wird der Relaiskolben des Entlüftungsventils 71 gegen Federdruck der Entlüftungs-Ventilfeder 72 des Entlüftungsventils 71 geöffnet; d. h. der erste Entlüftungs-Ventilanschluss zum zweiten Entlüftungs-Ventilanschluss X1, Y1 des Entlüftungsventils 71 wird miteinander pneumatisch verbunden, so dass die Entlüftungsleitung 70 zum Entlüftungsanschluss 3 geöffnet ist.
Zum Beenden des Entlüftungsvorgangs wird die Bestromung der Magnetspule des Steuerventils 81 aufgehoben und dieses fällt wieder in den in Fig. 2 gezeigten stromlosen Zustand zurück. Indem der zweite Teil 110.2 der pneumatischen Steuerleitung 110 über die weitere Entlüftungsleitung 73 zum Entlüftungsanschluss 3 entlüftet fällt folglich der Relaiskolben des Entlüftungsventils 71 unter Druck der Entlüftungs-Ventilfeder 72 wieder zu und trennt die Ventilanschlüsse X1, Y1 im Entlüftungsventil 71. Die Ventilanschlüsse X2, Y2 des Steuerventils 81 sind in diesem Zustand getrennt und halten den Steuerdruck des Druckspeichers 92.

Fig. 3 zeigt im Rahmen einer besonders bevorzugten Ausführungsform zur Bildung einer druckhaltenden pneumatischen Einrichtung 120 ein Steuerventil 81", das vorliegend als 2/2 Wegeventil ausgeführt ist. Zum Entlüften der Bälge 91 wird das 2/2 Magnet-Wegeventil durch Bestromung der Magnetspule für eine bestimme Zeitdauer geöffnet und dann durch Beenden der Bestromung wieder geschlossen; d. h. das Steuerventil 81" wird mittels eines ein Steuerintervall begrenzenden Steuerpuls-Paares angesteuert, beispielsweise durch einen Doppelpuls über die elektrische Steuerleitung 46 für ein Steuerintervall einer bestimmen Intervall-Zeitdauer, die ausreichend ist um einen Steuerdruck im zweiten Teil 110.2 der pneumatischen Steuerleitung 110 am Drucksteueranschluss 71S aufzubauen, geöffnet. Da das Steuerventil 81" nur während des Steuerintervall geöffnet ist und danach wieder geschlossen ist, kann der Steuerdruck im Vorsteuerkanal der pneumatischen Steuerleitung 110, d. h. im zweiten Teil 110.2 der pneumatischen Steuerleitung 110 auf dem Niveau des Anfangsdrucks gehalten werden. Der Relaiskolben des Entlüftungsventils 71 bleibt dann gegen den Federdruck der Entlüftungs-Ventilfeder 72 des Entlüftungsventils 71 geöffnet.

Zum Beenden des Entlüftungsvorgangs werden zunächst die als Balgventile dienenden Wegeventile 93 geschlossen. Dadurch sinkt der Druck im Trockner 61 auf Umgebungsdruck, d. h. Atmosphärendruck ab. Das 2/2-Wegeventil als Steuerventil 81" wird dann geöffnet; vorzugsweise ebenfalls nur für eine bestimmte Intervall-Zeitdauer. D. h. auch für den Entlüftungsvorgang wird das Steuerventil 81" in Form des 2/2 Wegeventils durch ein ein Steuerintervall begrenzendes Steuerpuls-Paar, beispielsweise einen Doppelpuls über die elektrische Steuerleitung 46 für eine bestimmte Intervall-Zeitdauer geöffnet. Der Druck im Vorsteuerkanal, d. h. in der pneumatischen Steuerleitung 110 baut sich durch das relativ große Lufttrocknervolumen des Lufttrockners 61 ab und die Entlüftungs-Ventilfeder 72 kann den Relaiskolben des Entlüftungsventils 71 gegen Umgebungsdruck schließen während des Öffnungszustands des 2/2-Wegeventils im Steuerintervall. Das Steuerintervall zum Beenden des Entlüftungsvorgangs und Umsetzen eines beispielsweise unbetätigten Zustands der Lufttrockneranlage 10" oder für einen Befüllvorgang wird eingeleitet durch erneutes Schließen des 2/2-Wegeventils am Ende der Intervall-Zeitdauer. Dadurch ist die pneumatische Steuerleitung 110 gegen die pneumatische Hauptleitung 60 geschlossen; d. h. der erste Teil 110.1 der pneumatischen Steuerleitung 110 ist vom zweiten Teil 110.2 der pneumatischen Steuerleitung 110 pneumatisch getrennt im stromlos geschlossenen Zustand des Steuerventils 81" in Form des 2/2 Wegeventils.

Die vorliegende in Fig. 3 gezeigte Ausführungsform ist nicht beschränkt auf eine Leitungsführung in der Pneumatikanlage zur pneumatischen Steuerleitung 110, d. h. analog der Fig. 1. Vielmehr kann auch eine Leitungsführung insbesondere zwischen dem Druckspeicher 92 und der pneumatischen Steuerleitung 110, d. h. analog der Fig. 2, also mit einem dritten Teil 110.3 der pneumatischen Steuerleitung 110 zwischen der Speicher-Zweigleitung 92L und der pneumatischen Steuerleitung 110 vorgesehen sein, wobei diese dann an der pneumatischen Hauptleitung 60 angeschlossen ist.

Fig. 4 zeigt schematisch den grundsätzlichen Verlauf eines Entlüftungsvorgangs für eine Druckluftversorgungsanlage 10" der Fig. 3 mittels einem Steuerventil 81" in Form eines 2/2 Wegeventils. Zunächst kann in einem ersten Schritt S1 der Verdichter 21 betätigt werden und der Lufttrockner 61 und die Steuerleitung pneumatisch aufgeladen werden. Zur Einleitung eines Entlüftungsvorgangs kann in einem ersten Schritt S1 auch sichergestellt werden, dass der Druckspeicher 92 einen ausreichenden Systemdruck aufweist, der zur Bereitstellung eines Steuerdrucks in der pneumatischen Steuerleitung 110 bzw. am Drucksteueranschluss 71 des Entlüftungsventils 71 ausreicht. Dazu kann gegebenenfalls der Druckspeicher 92 durch Betätigen des Verdichters 21 aufgeladen werden. Dazu wird das dem Druckspeicher 92 vorgeschaltete Speicherventil in Form eines Wegeventils 93.S geöffnet; das Wegeventil 93.S nimmt den Zustand AUF ein.

Die Entlüftungsphase wird dann eingeleitet durch einen elektromagnetischen Intervallsteuerschritt S2 an das Steuerventil 81" unter Aufbauen --S2.1; das Steuerventil 81" und ggf. das Wegeventil 93.S nimmt den Zustand AUF einund Halten --S2.2; das Steuerventil 81" und ggf. das Wegeventil 93.S nimmt den Zustand ZU ein-- eines Steuerdrucks auch im zweiten Teil 110.2 der pneumatischen Steuerleitung 110 am Drucksteueranschluss 71S. Dazu wird in einem Schritt S2.1 intervallbeginnend und zum Aufbau des Steuerdrucks am Drucksteueranschluss 71S der erste und zweite Steuer-Ventilanschluss X2, Y2 des Steuerventils 81" geöffnet, d. h. pneumatisch miteinander verbunden; nämlich mittels eines ersten Pulses eines elektromagnetischen Doppelpulses an die Magnetspule des Steuerventils 81". Nach Ablauf einer vorbestimmten Intervall-Zeitdauer wird intervallendend zum Halten des Drucksteueranschluss 71S unter Steuerdruck die Bestromung des Steuerventils 81" aufgehoben; nämlich mittels eines zweiten Pulses eines elektromagnetischen Doppelpulses. Folglich fällt das Steuerventil 81" in den unbestromten in Fig. 3 gezeigten Zustand zurück und der erste und zweite Steuer-Ventilanschluss X2, Y2 werden getrennt; d. h. im Schritt S2.2 ist das Steuerventil 81" im geschlossenen Zustand.

Der Relaiskolben des Entlüftungsventils 71 öffnet und durch Öffnen der als Balgventile dienenden Wegeventile 93 im Schritt S3 kann der Entlüftungsvorgang eingeleitet werden --S3; das Wegeventil 93 nimmt den Zustand AUF ein--. Der Entlüftungsvorgang wird in einem Schritt S4 durch Schließen der als Balgventile dienenden Wegeventile 93 beendet --S4; das Wegeventil 93 nimmt den Zustand ZU ein--.

In einer in Fig. 4 ebenfalls --gestrichelt-- angezeigten abgewandelten Verfahrensführung kann der Schritt S3 als Schritt S3'auch vor dem Schritt S2 ausgeführt werden. In dem Fall sind die als Balgventile dienenden Wegeventile 93 bereits offen, bevor die Intervall-Steuerfunktionalität des Steuerventils 81" des Schrittes S2 ausgeführt wird --S3'; das Wegeventil 93 nimmt den Zustand AUF ein--. In dem Fall wird der Steuerdruck ganz oder teilweise mit Balgdruck aufgebaut; es wird der Steuerdruck ggf. zusätzlich sichergestellt --unabhängig von einem Druck in der Entlüftungsleitung 70 und/oder der pneumatischen Hauptleitung 60-- durch Zuschalten entweder des Druckspeichers 92 oder durch kurzzeitiges Anschalten des Verdichters 21 --S3'; das Wegeventil 93.S nimmt den Zustand AUF ein--. Auch in diesem Fall führt dann eine Intervall-Steuerfunktionalität für das Steuerventils 81" zum Aufbauen und Halten des Steuerdrucks wie dies anhand von Schritt S2 erläutert wurde.

Nach dem Beenden des Entlüftungsvorgangs im Schritt S4 wird schließlich im Schritt S5 durch ein erneutes Intervallsteuern des Steuerventils 81" in Form des 2/2-Wegeventils der zweite Teil 110.2 der pneumatischen Steuerleitung 110, d. h. der Drucksteueranschluss 71S, drucklos gestellt bzw. auf Umgebungsdruck gestellt. Dazu wird der zweite Teil 110.2 bzw. die gesamte pneumatische Steuerleitung 110 im Schritt S5.1 entlüftet durch Öffnen des ersten und zweiten Steuer-Ventilanschlusses X2, Y2 des Steuerventils 81" zu Beginn der Intervall-Steuerfunktionalität; d. h. das Steuerventil 81" wird kurzzeitig bestromt und geht in den bestromten Zustand über; der im zweiten Teil 110.2 enthaltene Druck kann über den Lufttrockner 61 in der pneumatischen Hauptleitung 60 und die Drossel 62 entweichen --S5.1; das Steuerventil 81" nimmt den Zustand AUF ein--. Nach einer vorbestimmten Intervall-Zeitdauer wird im Schritt S5.2 die Bestromung des Steuerventils 81" aufgehoben und dieses fällt in den in Fig. 3 gezeigten stromlosen Zustand zurück und schließt damit den ersten Teil 110.1 gegen den zweiten Teil 110.2 einer pneumatischen Steuerleitung 110. Der Relaiskolben des Entlüftungsventils 71 ist damit auf Schaltdruck, der über dem Umgebungsdruck liegt, und die Entlüftungs-Ventilfeder 72 des Entlüftungsventils 71 schließt dieses in den nicht angesteuerten in Fig. 3 gezeigten Zustand, so dass die Entlüftungsleitung 70 geschlossen ist infolge der pneumatisch getrennten ersten und zweiten Entlüftungs-Ventilanschlüsse X1, Y1 --S5.2; das Steuerventil 81" nimmt den Zustand ZU ein--. Der Entlüftungsvorgang ist damit beendet und kann wiederum mit Schritt S1 wiederholt werden. Mit Beginn des Schrittes S2.1 und bis zum Ende des Schrittes S4 wird ein Absenken des Fahrzeugsaufbaus 200 aufgrund des aus den Bälgen 91 entweichenden Luftvolumens, beispielsweise für die Frontachse 210 und/oder Rückachse 220, umgesetzt.

### Bezugszeichenliste

- 0: Luftzuführungsanschluss
- 1: Druckluftzuführung
- 2: Druckluftanschluss
- 3, 3': Entlüftungsanschluss
- 10, 10', 10": Druckluftversorgungsanlage
- 20: Luftzuführungsleitung
- 21: Verdichtereinheit
- 21.1: Kompressor
- 21.2: Elektromotor
- 22: Luftzuführung
- 23: Filter
- 24.1, 24.2: Rückschlagventil
- 40: Datenbus
- 41, 47: Stromleitungen
- 42: Relais
- 43, 46: elektrische Steuerleitungen
- 44, 45, 48: Sensorleitungen
- 50: Steckverbindung
- 60: pneumatische Hauptleitung
- 61: Lufttrockner
- 62: Drossel
- 63: Zweiganschluss der pneumatischen Hauptleitung
- 70: Entlüftungsleitung
- 71: Entlüftungsventil
- 72: Entlüftungs-Ventilfeder
- 73: weitere Entlüftungsleitung
- 74: Relaisdruckbegrenzer
- 80: Magnetventilanordnung
- 81, 81', 81": Steuerventil
- 82: Steuer-Ventilfeder
- 90, 90', 90": Pneumatikanlage
- 91: Balg
- 91L: Balg-Zweigleitung
- 92: Druckspeicher
- 92L: Speicher-Zweigleitung
- 93, 93.S: Wegeventil
- 94: Drucksensor
- 95: Galerie
- 96: weitere Pneumatikleitung
- 97: Höhensensoren
- 98: Ventilblock
- 99: Balg-Drucksensor
- 100, 100', 100": pneumatisches System
- 110: pneumatische Steuerleitung
- 110.1, 110.2, 110.3: erster, zweiter, dritter Teil der pneumatischen Steuerleitung 110
- 111: Rückschlagventil
- 120: druckhaltende pneumatische Einrichtung
- 200: Fahrzeugaufbau
- 210: Frontachse
- 220: Rückachse
- 1000: Fahrzeug
- X, Y: Ventilanschluss
- X1, Y1: erster, zweiter Entlüftungs-Ventilanschluss
- X2, Y2: erster, zweiter Steuer-Ventilanschluss
- Z2: dritter Steuer-Ventilanschluss

## Patentansprüche

1. Druckluftversorgungsanlage zum Betreiben einer Pneumatikanlage, insbesondere einer Luftfederanlage eines Fahrzeugs, aufweisend:
- eine Druckluftzuführung (1);
- einen Druckluftanschluss (2) zur Pneumatikanlage (90);
- einen Entlüftungsanschluss (3) zur Umgebung;
- eine pneumatische Hauptleitung (60) zwischen der Druckluftzuführung (1) und dem Druckluftanschluss (2), die einen Lufttrockner (61) aufweist,
- eine Entlüftungsleitung (70) zwischen der Druckluftzuführung (1) und dem Entlüftungsanschluss (3);
- eine Magnetventilanordnung (80) mit einem Steuerventil (81, 81', 81") zur Steuerung eines Entlüftungsventils (71), wobei
das Steuerventil (81, 81', 81") mit einem Steuer-Ventilanschluss (X2, Y2) in einer, an einem Drucksteueranschluss (71S) des Entlüftungsventils (71) angeschlossenen, pneumatischen Steuerleitung (110), und das Entlüftungsventil (71) mit einem Entlüftungs-Ventilanschluss (X1, Y1) in der Entlüftungsleitung (70) angeschlossen ist,
**dadurch gekennzeichnet, dass**
an die pneumatische Steuerleitung (110) eine druckhaltende pneumatische Einrichtung (120) angeschlossen ist, die ausgebildet ist, den Drucksteueranschluss (71S) bei geöffnetem Entlüftungs-Ventilanschluss (X1, Y1) des Entlüftungsventils (71) in der Entlüftungsleitung (70) unter Steuerdruck zu halten, unabhängig von einem Druck in der pneumatischen Hauptleitung (60).

2. Druckluftversorgungsanlage nach Anspruch 1 **dadurch gekennzeichnet, dass** die druckhaltende pneumatische Einrichtung (120) ausgebildet ist, den Drucksteueranschluss (71S) bei geöffnetem Entlüftungs-Ventilanschluss (X1, Y1) des Entlüftungsventils (71) in der Entlüftungsleitung (70) unter Steuerdruck zu halten, unabhängig von einem Druck in der Entlüftungsleitung (70).

3. Druckluftversorgungsanlage nach Anspruch 1 oder 2 **dadurch gekennzeichnet, dass**
die druckhaltende pneumatische Einrichtung (120) ausgebildet ist, den Drucksteueranschluss (71S) bei geöffnetem Entlüftungs-Ventilanschluss (X1, Y1) des Entlüftungsventils (71) in der Entlüftungsleitung (70) derart unter Druck zu halten, dass ein Druck in der Entlüftungsleitung (70) und/oder der pneumatischen Hauptleitung (60) variabel wahlbar ist, insbesondere unter einen Resthaltedruck absinken kann.

4. Druckluftversorgungsanlage nach Anspruch 1, 2 oder 3 **dadurch gekennzeichnet, dass**
ein Resthaltedruck durch eine, insbesondere variabel einstellbare, Entlüftungs-Ventilfeder (72) des Entlüftungsventils (71) vorgegeben ist.

5. Druckluftversorgungsanlage nach einem der Ansprüche 1 bis 4 **dadurch gekennzeichnet, dass**
die druckhaltende pneumatische Einrichtung (120) ausgebildet ist, den Drucksteueranschluss (71S) bei geöffnetem Entlüftungs-Ventilanschluss (X1, Y1) des Entlüftungsventils (71) in der Entlüftungsleitung (70) derart unter Druck zu halten, dass ein Druck in der Entlüftungsleitung (70) und/oder der pneumatischen Hauptleitung (60) praktisch bis auf einen Umgebungsdruck absinken kann.

6. Druckluftversorgungsanlage nach einem der Ansprüche 1 bis 5 **dadurch gekennzeichnet, dass**
die druckhaltende pneumatische Einrichtung (120) mit dem Steuerventil (81) und einem Rückschlagventil (111) gebildet ist, die in der pneumatischen Steuerleitung (110) angeschlossen sind.

7. Druckluftversorgungsanlage nach einem der Ansprüche 1 bis 6 **dadurch gekennzeichnet, dass**
die pneumatischen Steuerleitung (110) von der pneumatischen Hauptleitung (60) abzweigt, insbesondere die pneumatische Steuerleitung (110) an einem Zweiganschluss (63) von der pneumatischen Hauptleitung (60) abzweigt.

8. Druckluftversorgungsanlage nach einem der Ansprüche 1 bis 7 **dadurch gekennzeichnet, dass**
die pneumatische Steuerleitung (110) von der pneumatischen Hauptleitung (60) an einem zwischen einem Lufttrockner (61) und dem Druckluftanschluss (2), insbesondere zwischen einer Drossel (62) und dem Druckluftanschluss (2), angeordneten Zweiganschluss (63) abzweigt.

9. Druckluftversorgungsanlage nach einem der Ansprüche 1 bis 8 **dadurch gekennzeichnet, dass** das Rückschlagventil (111) zwischen der pneumatischen Hauptleitung (60), insbesondere dem Zweiganschluss (63), und dem ersten Steuer-Ventilanschluss (X2) des Steuerventils (81, 81', 81") angeschlossen ist.

10. Druckluftversorgungsanlage nach einem der Ansprüche 1 bis 9 **dadurch gekennzeichnet, dass** das Steuerventil (81') in Form eines 3/2-Wegeventils gebildet ist, wobei ein dritter Steuer-Ventilanschluss (Z2) des Steuerventils (81') an eine Umgebung angeschlossen ist, insbesondere der weitere Steuer-Ventilanschluss (Z2) ein weiterer Entlüftungsanschluss (3') zur Umgebung ist.

11. Druckluftversorgungsanlage nach einem der Ansprüche 1 bis 10 **dadurch gekennzeichnet, dass**
die druckhaltende pneumatische Einrichtung (120) mit dem Steuerventil (81') und einem Druckspeicher (92) gebildet ist.

12. Druckluftversorgungsanlage nach einem der Ansprüche 1 bis 11 **dadurch gekennzeichnet, dass**
die pneumatische Steuerleitung (110) an einen Druckspeicher (92) angeschlossen ist.

13. Druckluftversorgungsanlage nach einem der Ansprüche 1 bis 12 **dadurch gekennzeichnet, dass**
die pneumatische Steuerleitung (110) frei von einem Anschluss zur pneumatischen Hauptleitung (60) ist.

14. Druckluftversorgungsanlage nach einem der Ansprüche 1 bis 13 **dadurch gekennzeichnet, dass**
die pneumatische Steuerleitung (110) von einer zu einem Druckspeicher (92) führenden Speicher-Zweigleitung (92L) abzweigt.

15. Druckluftversorgungsanlage nach einem der Ansprüche 1 bis 14 **dadurch gekennzeichnet, dass**
das Steuerventil (81') in Form eines 3/2-Wegeventils gebildet ist, wobei ein dritter Steuer-Ventilanschluss (Z2) des Steuerventils (81') an eine Umgebung angeschlossen ist, insbesondere der weitere Steuer-Ventilanschluss (Z2) an den Entlüftungsanschluss (3) zur Umgebung angeschlossen ist.

16. Druckluftversorgungsanlage nach einem der Ansprüche 1 bis 15 **dadurch gekennzeichnet, dass**
die druckhaltende pneumatische Einrichtung (120), insbesondere nur, mit dem Steuerventil (81") gebildet ist, wobei das Steuerventil (81") einen ersten und einen zweiten Steuer-Ventilanschluss (X2, Y2) aufweist, die in der pneumatischen Steuerleitung (110) angeschlossen sind und das Steuerventil (81") frei von einem Ventilanschluss zur Umgebung ist, insbesondere das Steuerventil (81") in Form eines 2/2-Wegeventils gebildet ist.

17. Druckluftversorgungsanlage nach Anspruch 16 **dadurch gekennzeichnet, dass**
das Steuerventil (81") elektro-magnetisch intervallsteuerbar ist derart, dass intervallbeginnend zum Aufbau des Steuerdrucks auf den Drucksteueranschluss (71S) ein erster und ein zweiter Steuer-Ventilanschluss (X2, Y2) zu öffnen sind und intervallendend zum Halten des Drucksteueranschluss (71S) unter Steuerdruck der erste und der zweite Steuer-Ventilanschluss (X2, Y2) zu schließen sind.

18. Druckluftversorgungsanlage nach einem der Anspruche 1 bis 17 **dadurch gekennzeichnet, dass**
die pneumatische Steuerleitung (110) an einen Luftverdichter (21) und/oder Balg, (91) angeschlossen ist.

19. Pneumatisches System mit der Druckluftversorgungsanlage nach einem der Ansprüche 1 bis 18 und einer Pneumatikanlage, insbesondere die Pneumatikanlage (90) in Form einer Luftfederanlage gebildet ist, die eine Galerie (95) und wenigstens eine an die Galerie pneumatisch angeschlossene Balg- und/oder Speicher-Zweigleitung (91L, 92L) aufweist, wobei die angeschlossene Balg- und/oder Speicher-Zweigleitung (91L, 92L) einen Balg (91) und/oder einen Druckspeicher (92) aufweist, wobei dem Balg (91) und/oder dem Druckspeicher (92) jeweils ein Wegeventil (93) vorgeordnet ist.

20. Verfahren zum Steuern einer Druckluftversorgungsanlage zum Betreiben einer Pneumatikanlage, insbesondere einer Luftfederanlage eines Fahrzeugs, insbesondere nach einem der vorhergehenden Ansprüche, wobei die Druckluftversorgungsanlage aufweist:
- eine Druckluftzuführung (1)
- einen Druckluftanschluss (2) zur Pneumatikanlage (90)
- einen Entlüftungsanschluss (3) zur Umgebung .
- eine pneumatische Hauptleitung (60) zwischen der Druckluftzuführung (1) und dem Druckluftanschluss (2), die einen Lufttrockner (61) aufweist,
- eine Entlüftungsleitung (70) zwischen der Druckluftzuführung (1) und dem Entlüftungsanschluss (3),
- eine Magnetventilanordnung (80) mit einem Steuerventil (81, 81', 81") zur Steuerung eines Entlüftungsventils (71), wobei
das Steuerventil (81, 81', 81") mit einem Steuer-Ventilanschluss (X2, Y2) in einer, an einem Drucksteueranschluss (71S) des Entlüftungsventils (71) angeschlossenen, pneumatischen Steuerleitung (110), und das Entlüftungsventil (71) mit einem Entlüftungs-Ventilanschluss (X1, Y1) in der Entlüftungsleitung (70) angeschlossen ist,
**dadurch gekennzeichnet, dass** das Verfahren die Schritte aufweist:
- Anschließen einer druckhaltenden pneumatischen Einrichtung an die pneumatische Steuerleitung (110),
- Aufbauen von Steuerdruck an den Drucksteueranschluss (71S) des Entlüftungsventils (71),
- Öffnen des Entlüftungs-Ventilanschlusses (X1, Y1) des Entlüftungsventils (71) in der Entlüftungsleitung (70),
- Halten des Steuerdruck am Drucksteueranschluss (71S) des Entlüftungsventils (71), bei geöffnetem Entlüftungs-Ventilanschluss (X1, Y1) des Entlüftungsventils (71) unabhängig von einem Druck in der pneumatischen Hauptleitung (60).

21. Verfahren nach Anspruch 20, **dadurch gekennzeichnet, dass** das Halten des Steuerdrucks am Drucksteueranschluss (71S) des Entlüftungsventils (71), bei geöffnetem Entlüftungs-Ventilanschluss (X1, Y1) des Entlüftungsventils (71) unabhängig von einem Druck in der Entlüftungsleitung (70) ist.

22. Verfahren nach Anspruch 20 oder 21, **dadurch gekennzeichnet, dass** die druckhaltende pneumatische Einrichtung (120) mit dem Steuerventil (81") gebildet ist, wobei das Steuerventil (81") einen ersten und einen zweiten Steuer-Ventilanschluss (X2, Y2) aufweist, die in der pneumatischen Steuerleitung (110) angeschlossen sind und das Steuerventil (81") frei von einem Ventilanschluss zur Umgebung ist, insbesondere das Steuerventil (81") in Form eines 2/2-Wegeventils gebildet ist, wobei das Verfahren die weiteren Schritte aufweist:
- elektromagnetisches Intervallsteuern des Steuerventils (81"), wobei
intervallbeginnend zum Aufbau des Steuerdrucks auf den Drucksteueranschluss (71S) der erste und der zweite Steuer-Ventilanschluss (X2, Y2) geöffnet werden und
intervallendend zum Halten des Drucksteueranschluss (71S) unter Steuerdruck der erste und der zweite Steuer-Ventilanschluss (X2, Y2) geschlossen werden.

## Claims

1. Compressed air supply assembly for operating a pneumatic assembly, in particular an air spring assembly of a vehicle, comprising:
- a compressed air supply (1);
- a compressed air connection (2) to the pneumatic assembly (90);
- a purge connection (3) to the environment;
- a pneumatic main line (60) between the compressed air supply (1) and the compressed air connection (2), comprising an air dryer (61);
- a purge line (70) between the compressed air supply (1) and the purge connection (3);
- a solenoid valve arrangement (80) with a control valve (81, 81', 81") to control a purge valve (71),
wherein
the control valve (81, 81', 81") is connected to a control valve connection (X2, Y2) in a pneumatic control line (110) which is connected to a pressure control connection (71S) of the purge valve (71), and the purge valve (71) is connected to a purge valve connection (X1, Y1) in the purge line (70),
**characterized in that**
a pressure-maintaining pneumatic device (120) is connected to the pneumatic control line (110) and is adapted to maintain control pressure at the pressure control connection (71S) when the purge valve connection (X1, Y1) of the purge valve (71) in the purge line (70) is open, independently of a pressure in the pneumatic main line (60).

2. Compressed air supply assembly according to Claim 1, **characterized in that** the pressure-maintaining pneumatic device (120) is adapted to maintain a control pressure at the pressure control connection (71S) when the purge valve connection (X1, Y1) of the purge valve (71) in the purge line (70) is open, independently of a pressure in the purge line (70).

3. Compressed air supply assembly according to Claim 1 or 2, **characterized in that** the pressure-maintaining pneumatic device (120) is adapted to maintain a pressure at the pressure control connection (71S) when the purge valve connection (X1, Y1) of the purge valve (71) in the purge line (70) is open such that a pressure in the purge line (70) and/or the pneumatic main line (60) can be selected variably, in particular can fall below a residual maintaining pressure.

4. Compressed air supply assembly according to Claim 1, 2 or 3, **characterized in that** a residual maintaining pressure is predefined by an in particular variably adjustable purge valve spring (72) of the purge valve (71) .

5. Compressed air supply assembly according to any of Claims 1 to 4, **characterized in that** the pressure-maintaining pneumatic device (120) is adapted to maintain a pressure at the pressure control connection (71S) when the purge valve connection (X1, Y1) of the purge valve (71) in the purge line (70) is open such that a pressure in the purge line (70) and/or in the pneumatic main line (60) can fall practically to ambient pressure.

6. Compressed air supply assembly according to any of Claims 1 to 5, **characterized in that** the pressure-maintaining pneumatic device (120) is formed with the control valve (81) and a non-return valve (111) which are connected in the pneumatic control line (110).

7. Compressed air supply assembly according to any of Claims 1 to 6, **characterized in that** the pneumatic control line (110) branches from the pneumatic main line (60), in particular the pneumatic control line (110) branches from the pneumatic main line (60) at a branch connection (63).

8. Compressed air supply assembly according to any of Claims 1 to 7, **characterized in that** the pneumatic control line (110) branches from the pneumatic main line (60) at a branch connection (63) arranged between an air dryer (61) and the compressed air connection (2), in particular between a choke (62) and the compressed air connection (2).

9. Compressed air supply assembly according to any of Claims 1 to 8, **characterized in that** the non-return valve (111) is connected between the pneumatic main line (60), in particular the branch connection (63), and the first control valve connection (X2) of the control valve (81, 81', 81").

10. The compressed air supply assembly according to any of Claims 1 to 9, **characterized in that** the control valve (81') is formed as a 3/2-way valve, wherein a third control valve connection (Z2) of the control valve (81') is connected to the environment, in particular the further control valve connection (Z2) is a further purge connection (3') to the environment.

11. Compressed air supply assembly according to any of Claims 1 to 10, **characterized in that** the pressure-maintaining pneumatic device (120) is formed with the control valve (81') and a pressure accumulator (92).

12. Compressed air supply assembly according to any of Claims 1 to 11, **characterized in that** the pneumatic control line (110) is connected to a pressure accumulator (92).

13. Compressed air supply assembly according to any of Claims 1 to 12, **characterized in that** the pneumatic control line (110) has no connection to the main pneumatic line (60).

14. Compressed air supply assembly according to any of Claims 1 to 13, **characterized in that** the pneumatic control line (110) branches from an accumulator branch line (92L) leading to a pressure accumulator (92).

15. Compressed air supply assembly according to any of Claims 1 to 14, **characterized in that** the control valve (81') is formed as a 3/2-way valve, wherein a third control valve connection (Z2) of the control valve (81') is connected to the environment, in particular the further control valve connection (Z2) is connected to the purge connection (3) to the environment.

16. Compressed air supply assembly according to any of Claims 1 to 15, **characterized in that** the pressure-maintaining pneumatic device (120) is formed in particular only with the control valve (81"), wherein the control valve (81") comprises a first and a second control valve connection (X2, Y2) which are connected in the pneumatic control line (110) and the control valve (81") has no valve connection to the environment, in particular the control valve (81") is formed as a 2/2-way valve.

17. Compressed air supply assembly according to Claim 16, **characterized in that** the control valve (81") is electromagnetically interval-controllable such that at the start of the interval, to build up a control pressure at the pressure control connection (71S), a first and a second control valve connection (X2, Y2) must be opened and to end the interval, to maintain the control pressure at the pressure control connection (71S), the first and the second control valve connections (X2, Y2) must be closed.

18. Compressed air supply assembly according to any of Claims 1 to 17, **characterized in that** the pneumatic control line (110) is connected to an air compressor (21) and/or a bellows (91).

19. Pneumatic system with the compressed air supply assembly according to any of Claims 1 to 18 and a pneumatic assembly, in particular the pneumatic assembly (90) is formed in the form of an air spring assembly which comprises a gallery (95) and at least one bellows and/or accumulator branch line (91L, 92L) pneumatically connected to the gallery, wherein the connected bellows and/or accumulator branch line (91L, 92L) comprises a bellows (91) and/or a pressure accumulator (92), wherein a directional valve (93) is arranged before the bellows (91) and/or the pressure accumulator (92) respectively.

20. Method for controlling a compressed air supply assembly for operating a pneumatic assembly, in particular an air spring assembly of a vehicle, in particular according to any of the preceding claims, wherein the compressed air supply assembly comprises:
- a compressed air supply (1),
- a compressed air connection (2) to the pneumatic assembly (90),
- a purge connection (3) to the environment,
- a pneumatic main line (60) between the compressed air supply (1) and the pressure connection (2), comprising an air dryer (61),
- a purge line (70) between the compressed air supply (1) and the purge connection (3),
- a solenoid valve arrangement (80) with a control valve (81, 81', 81") to control a purge valve (71),
wherein
the control valve (81, 81', 81") is connected to a control valve connection (X2, Y2) in a pneumatic control line (110) which is connected to a pressure control connection (71S) of the purge valve (71), and the purge valve (71) is connected to a purge valve connection (X1, Y1) in the purge line (70), **characterized in that** the method comprises the steps:
- connection of a pressure-maintaining pneumatic device to the pneumatic control line (110),
- build up of control pressure at the pressure control connection (71S) of the purge valve (71),
- opening of the purge valve connection (X1, Y1) of the purge valve (71) into the purge line (70),
- maintaining the control pressure at the pressure control connection (71S) of the purge valve (71) when the purge valve connection (X1, Y1) of purge valve (71) is open, independently of a pressure in the pneumatic main line (60).

21. Method according to Claim 20, **characterized in that** maintaining the control pressure at the pressure control connection (71S) of the purge valve (71) when the purge valve connetion (X1, Y1) of purge valve (71) is open is independent of a pressure in the purge line (70) .

22. Method according to Claim 20 or 21, **characterized in that** the pressure-maintaining pneumatic device (120) is formed with the control valve (81"), wherein the control valve (81") comprises a first and a second control valve connection (X2, Y2) which are connected in the pneumatic control line (110), and the control valve (81") has no valve connection to the environment, in particular the control valve (81") is formed as a 2/2-way valve, wherein the method comprises the further steps:
- electromagnetic interval-control of the control valve (81"), wherein at the start of the interval, to build up the control pressure at the pressure control connection (71S), the first and the second control valve connections (X2, Y2) are opened, and to end the interval, to maintain the control pressure at the pressure control connection (71S), the first and the second control valve connections (X2, Y2) are closed.

## Revendications

1. Installation d'alimentation en air comprimé permettant de faire fonctionner une installation pneumatique, en particulier une installation de suspension pneumatique d'un véhicule, présentant:
- une arrivée d'air comprimé (1);
- un raccord d'air comprimé (2) vers l'installation pneumatique (90);
- un raccord d'échappement d'air (3) vers l'ambiance;
- une conduite principale pneumatique (60) entre l'arrivée d'air comprimé (1) et le raccord d'air comprimé (2), qui présente un sécheur d'air (61),
- une conduite d'échappement d'air (70) entre l'arrivée d'air comprimé (1) et le raccord d'échappement d'air (3) ;
- un système de vannes magnétiques (80) avec une vanne de commande (81, 81', 81") pour la commande d'une vanne d'échappement d'air (71),
dans laquelle la vanne de commande (81, 81', 81") est raccordée à un raccord de vanne de commande (X2, Y2) dans une conduite de commande pneumatique (110) raccordée à un raccord de commande de pression (71S) de la vanne d'échappement d'air (71), et la vanne d'échappement d'air (71) est raccordée à un raccord de vanne d'échappement d'air (X1, Y1) dans la conduite d'échappement d'air (70),
**caractérisée en ce qu'**un dispositif pneumatique de maintien de pression (120) est raccordé à la conduite de commande pneumatique (110) et est configuré de façon à maintenir le raccord de commande de pression (71S) sous pression de commande lorsque le raccord de vanne d'échappement d'air (X1, Y1) de la vanne d'échappement d'air (71) dans la conduite d'échappement d'air (70) est ouvert, indépendamment d'une pression dans la conduite principale pneumatique (60).

2. Installation d'alimentation en air comprimé selon la revendication 1, **caractérisée en ce que** le dispositif pneumatique de maintien de pression (120) est configuré de façon à maintenir le raccord de commande de pression (71S) sous pression de commande lorsque le raccord de vanne d'échappement d'air (X1, Y1) de la vanne d'échappement d'air (71) dans la conduite d'échappement d'air (70) est ouvert, indépendamment d'une pression dans la conduite d'échappement d'air (70).

3. Installation d'alimentation en air comprimé selon la revendication 1 ou 2, **caractérisée en ce que** le dispositif pneumatique de maintien de pression (120) est configuré de façon à maintenir le raccord de commande de pression (71S) sous pression lorsque le raccord de vanne d'échappement d'air (X1, Y1) de la vanne d'échappement d'air (71) dans la conduite d'échappement d'air (70) est ouvert, de telle manière qu'une pression dans la conduite d'échappement d'air (70) et/ou dans la conduite principale pneumatique (60) puisse être choisie de façon variable, en particulier puisse baisser en dessous d'une pression de maintien résiduelle.

4. Installation d'alimentation en air comprimé selon la revendication 1, 2 ou 3, **caractérisée en ce qu'**une pression de maintien résiduelle est prédéterminée par un ressort de vanne d'échappement d'air (72) réglable de façon variable de la vanne d'échappement d'air (71).

5. Installation d'alimentation en air comprimé selon l'une quelconque des revendications 1 à 4, **caractérisée en ce que** le dispositif pneumatique de maintien de pression (120) est configuré de façon à maintenir le raccord de commande de pression (71S) sous pression lorsque le raccord de vanne d'échappement d'air (X1, Y1) de la vanne d'échappement d'air (71) dans la conduite d'échappement d'air (70) est ouvert, de telle manière qu'une pression dans la conduite d'échappement d'air (70) et/ou dans la conduite principale pneumatique (60) puisse baisser pratiquement jusqu'à une pression ambiante.

6. Installation d'alimentation en air comprimé selon l'une quelconque des revendications 1 à 5, **caractérisée en ce que** le dispositif pneumatique de maintien de pression (120) est formé avec une vanne de commande (81) et un clapet anti-retour (111), qui sont raccordés dans la conduite de commande pneumatique (110).

7. Installation d'alimentation en air comprimé selon l'une quelconque des revendications 1 à 6, **caractérisée en ce que** la conduite de commande pneumatique (110) est dérivée de la conduite principale pneumatique (60), en particulier la conduite de commande pneumatique (110) est dérivée de la conduite principale pneumatique (60) à un raccord de branchement (63).

8. Installation d'alimentation en air comprimé selon l'une quelconque des revendications 1 à 7, **caractérisée en ce que** la conduite de commande pneumatique (110) est dérivée de la conduite principale pneumatique (60) à un raccord de branchement (63) disposé entre un sécheur d'air (61) et le raccord d'air comprimé (2), en particulier entre un étranglement (62) et le raccord d'air comprimé (2).

9. Installation d'alimentation en air comprimé selon l'une quelconque des revendications 1 à 8, **caractérisée en ce que** le clapet anti-retour (111) est raccordé entre la conduite principale pneumatique (60), en particulier le raccord de branchement (63), et le premier raccord de vanne de commande (X2) de la vanne de commande (81, 81', 81").

10. Installation d'alimentation en air comprimé selon l'une quelconque des revendications 1 à 9, **caractérisée en ce que** la vanne de commande (81') est constituée par une vanne à 3/2 voies, dans laquelle un troisième raccord de vanne de commande (Z2) de la vanne de commande (81') est raccordé à une ambiance, en particulier l'autre raccord de vanne de commande (Z2) est un autre raccord d'échappement d'air (3').

11. Installation d'alimentation en air comprimé selon l'une quelconque des revendications 1 à 10, **caractérisée en ce que** le dispositif pneumatique de maintien de pression (120) est formé avec la vanne de commande (81') et un réservoir sous pression (92).

12. Installation d'alimentation en air comprimé selon l'une quelconque des revendications 1 à 11, **caractérisée en ce que** la conduite de commande pneumatique (110) est raccordée à un réservoir sous pression (92).

13. Installation d'alimentation en air comprimé selon l'une quelconque des revendications 1 à 12, **caractérisée en ce que** la conduite de commande pneumatique (110) est libre de raccord vers la conduite principale pneumatique (60).

14. Installation d'alimentation en air comprimé selon l'une quelconque des revendications 1 à 13, **caractérisée en ce que** la conduite de commande pneumatique (110) est dérivée d'une conduite de branchement de réservoir (92L) conduisant à un réservoir sous pression (92).

15. Installation d'alimentation en air comprimé selon l'une quelconque des revendications 1 à 14, **caractérisée en ce que** la vanne de commande (81') est constituée par une vanne à 3/2 voies, dans laquelle un troisième raccord de vanne de commande (Z2) de la vanne de commande (81') est raccordé à une ambiance, en particulier l'autre raccord de vanne de commande (Z2) est raccordé au raccord d'échappement d'air (3) vers l'ambiance.

16. Installation d'alimentation en air comprimé selon l'une quelconque des revendications 1 à 15, **caractérisée en ce que** le dispositif pneumatique de maintien de pression (120) est formé, en particulier uniquement, avec la vanne de commande (81"), dans laquelle la vanne de commande (81") présente un premier et un deuxième raccords de vanne de commande (X2, Y2), qui sont raccordés dans la conduite de commande pneumatique (110) et la vanne de commande (81") est libre d'un raccord de vanne vers l'ambiante, en particulier la vanne de commande (81") est constituée par une vanne à 2/2 voies.

17. Installation d'alimentation en air comprimé selon la revendication 16, **caractérisée en ce que** la vanne de commande (81") peut être commandée de façon électromagnétique par intervalles, de telle manière qu'au début d'un intervalle un premier et un deuxième raccords de vanne de commande (X2, Y2) doivent être ouverts pour instaurer la pression de commande au raccord de commande de pression (71S) et qu'à la fin de l'intervalle le premier et le deuxième raccords de vanne de commande (X2, Y2) doivent être fermés pour maintenir le raccord de commande de pression (71S) sous pression de commande.

18. Installation d'alimentation en air comprimé selon l'une quelconque des revendications 1 à 17, **caractérisée en ce que** la conduite de commande pneumatique (110) est raccordée à un compresseur d'air (21) et/ou à un soufflet (91).

19. Système pneumatique avec l'installation d'alimentation en air comprimé selon l'une quelconque des revendications 1 à 18 et une installation pneumatique, en particulier l'installation pneumatique (90) est réalisée sous la forme d'une installation de suspension pneumatique, qui présente une rampe (95) et au moins une conduite de branchement de soufflet et/ou de réservoir (91L, 92L) raccordée de façon pneumatique à la rampe, dans lequel la conduite de branchement de soufflet et/ou de réservoir raccordée (91L, 92L) présente un soufflet (91) et/ou un réservoir sous pression (92), dans lequel une vanne de distribution (93) est montée respectivement avant le soufflet (91) et/ou le réservoir sous pression (92).

20. Procédé de commande d'une installation d'alimentation en air comprimé permettant de faire fonctionner une installation pneumatique, en particulier une installation de suspension pneumatique d'un véhicule, en particulier selon l'une quelconque des revendications précédentes, dans lequel l'installation d'alimentation en air comprimé présente:
- une arrivée d'air comprimé (1);
- un raccord d'air comprimé (2) vers l'installation pneumatique (90);
- un raccord d'échappement d'air (3) vers l'ambiance;
- une conduite principale pneumatique (60) entre l'arrivée d'air comprimé (1) et le raccord d'air comprimé (2), qui présente un sécheur d'air (61),
- une conduite d'échappement d'air (70) entre l'arrivée d'air comprimé (1) et le raccord d'échappement d'air (3) ;
- un système de vannes magnétiques (80) avec une vanne de commande (81, 81', 81") pour la commande d'une vanne d'échappement d'air (71),
dans lequel la vanne de commande (81, 81', 81") est raccordée à un raccord de vanne de commande (X2, Y2) dans une conduite de commande pneumatique (110) raccordée à un raccord de commande de pression (71S) de la vanne d'échappement d'air (71), et la vanne d'échappement d'air (71) est raccordée à un raccord de vanne d'échappement d'air (X1, Y1) dans la conduite d'échappement d'air (70),
**caractérisé en ce que** le procédé présente les étapes suivantes:
- raccorder un dispositif pneumatique de maintien de pression à la conduite de commande pneumatique (110),
- instaurer une pression de commande au raccord de commande de pression (71S) de la vanne d'échappement d'air (71),
- ouvrir le raccord de vanne d'échappement d'air (X1, Y1) de la vanne d'échappement d'air (71) dans la conduite d'échappement d'air (70),
- maintenir la pression de commande au raccord de commande de pression (71S) de la vanne d'échappement d'air (71), lorsque le raccord de vanne d'échappement d'air (X1, Y1) de la vanne d'échappement d'air (71) est ouvert, indépendamment d'une pression dans la conduite principale pneumatique (60).

21. Procédé selon la revendication 20, **caractérisé en ce que** le maintien de la pression de commande au raccord de commande de pression (71S) de la vanne d'échappement d'air (71), lorsque le raccord de vanne d'échappement d'air (X1, Y1) de la vanne d'échappement d'air (71) est ouvert, est indépendant d'une pression dans la conduite d'échappement d'air (70).

22. Procédé selon la revendication 20 ou 21, **caractérisé en ce que** le dispositif pneumatique de maintien de pression (120) est formé avec la vanne de commande (81"), dans lequel la vanne de commande (81") présente un premier et un deuxième raccords de vanne de commande (X2, Y2), qui sont raccordés dans la conduite de commande pneumatique (110) et la vanne de commande (81") est libre d'un raccord de vanne vers l'ambiance, en particulier la vanne de commande (81") est constituée par une vanne à 2/2 voies, dans lequel le procédé présente les étapes supplémentaires suivantes:
- commander de façon électromagnétique par intervalles la vanne de commande (81"), dans lequel
on ouvre un premier et un deuxième raccords de vanne de commande (X2, Y2) au début d'un intervalle pour instaurer la pression de commande au raccord de commande de pression (71S) et
on ferme le premier et le deuxième raccords de vanne de commande (X2, Y2) à la fin de l'intervalle pour maintenir le raccord de commande de pression (71S) sous pression de commande.
